# EUROPÄISCHE PATENTSCHRIFT

(11) **EP 3 956 073 B1**
(45) Veröffentlichungstag und Bekanntmachung des Hinweises auf die Patenterteilung: **20.03.2024**
(21) Anmeldenummer: 20711850.6
(22) Anmeldetag: 11.03.2020
(51) Int. Cl.: B05B 15/00, B05B 7/00

(54) **VERSCHLIESSBARE DÜSE**
CLOSABLE NOZZLE
BUSE REFERMABLE

(30) Priorität: 18.04.2019 DE 102019205740
(43) Veröffentlichungstag der Anmeldung: 23.02.2022
(73) Patentinhaber: Glatt Gesellschaft mit beschränkter Haftung, 79589 Binzen (DE)
(72) Erfinder: NOWAK, Reinhard, 79540 Lörrach (DE); STEINKE, Lars, 79541 Lörrach (DE)
(74) Vertreter: Patentanwälte Magenbauer & Kollegen Partnerschaft mbB
(86) Internationale Anmeldenummer: PCT/EP2020/056504
(87) Internationale Veröffentlichungsnummer: WO 2020/212023

(56) Entgegenhaltungen:
- EP-B1- 1 497 034
- DE-A1- 2 419 148
- DE-B4- 10 116 051
- FR-A1- 2 541 911
- FR-A5- 2 115 663

## Beschreibung

Die Erfindung betrifft eine Düse zum Versprühen von Stoffen, insbesondere Dispersionen, Emulsionen oder Suspensionen, umfassend einen ein Düsenmundstück aufweisenden Düsenkörper, wobei der Düsenkörper ein mit einer Zuführung für den zu versprühenden Stoff verbundenes eine Innenwandung und eine Austrittsöffnung aufweisendes Innenrohr und ein zum Innenrohr beabstandetes und mit einer Zuführung für ein Gas verbundenes eine Austrittsöffnung aufweisendes Außenrohr aufweist, und die Austrittsöffnung des Innenrohrs und die Austrittsöffnung des Außenrohrs im Bereich des Düsenmundstückes angeordnet sind.

In industriellen Prozessen, wie beispielsweise der Granulation, dem Coating von Tabletten und Pellets sowie der direkten Herstellung von Pellets, kommen sehr häufig Düsen bzw. Sprühdüsen zum Einsatz. Hierbei werden die Partikel mit einer Schicht und/oder einem Film überzogen. In der Regel werden Flüssigkeiten, in denen Feststoffe gelöst oder suspendiert sind, versprüht. Diese Sprühprozesse können mehrere Stunden dauern. Durch die Zerstäubung wird der Flüssigkeitsstrahl in kleine Tröpfchen zerstäubt. Die hierbei entstehende Tröpfchengröße ist von essentieller Bedeutung für den Herstellungs- und/oder Sprühprozess. Sind die Tröpfchen zu klein, besteht die Gefahr, dass sie trocknen bevor sie ihr Ziel erreichen, sind die Tröpfchen zu groß, besteht die Gefahr, dass unerwünschte Agglomerate entstehen. Durch die prozessbedingten Wirbel vor der Düse kann es - insbesondere bei langanhaltenden Sprühprozessen - zu Ablagerungen an der Düsenöffnung, also einer Bartbildung, kommen. Diese Ablagerungen beeinflussen die Symmetrie und die Tröpfchengröße des Sprays, sodass es zu nicht erwünschten Prozessauswirkungen wie beispielsweise der Sprühtrocknung und/oder lokalen Überfeuchtung und Agglomeration, kommt.

Die Tröpfchengröße kann zudem dadurch beeinflusst werden, dass sich in der Zuführung für den zu versprühenden Stoff oder der Zuführung für das Gas, insbesondere das Zerstäubergas, zu beschichtende bzw. zu behandelnde Partikel ab- oder festsetzen. Ein solches Ab- oder Festsetzen kann insbesondere in den Zeitabschnitten erfolgen, in denen nicht gesprüht wird, bspw. beim Befüllen der Vorrichtung, insbesondere des Fluidisierungsapparates oder des Trommelcoaters, indem die Partikel in die Austrittsöffnungen der Düse gelangen und diese dadurch verstopfen.

Der nachstehende Stand der Technik stellt technische Lösungen dar, die unerwünschten Ablagerungen an der Düse, insbesondere am Düsenmundstück, verhindern oder zumindest minimieren.

Die deutsche Gebrauchsmusterschrift DE 8 430 364 U1 offenbart eine Wirbelschichtapparatur mit mindestens einer nach oben gerichteten Sprühdüse, wobei die Sprühdüse(n) einen mit einer Düsennadel verschließbaren Flüssigkeitsaustritt hat, sodass die Gefahr des Verstopfens der Sprühdüse vermieden, mindestens jedoch wesentlich vermindert wird. Nachteilig an der vorgenannten technischen Lösung ist, dass die Düsennadel für den Flüssigkeitsaustritt der Sprühdüse einen sehr komplexen Aufbau aufweist.

Die FR 2 541 911 A1 zeigt eine Düse, wobei die Düse ein Innenrohr und ein Außenrohr aufweisen, zwischen denen sich ein Ringspalt ausbildet und zwischen denen eine öffenbare Ventileinrichtung in diesem Ringspalt angeordnet ist. Die Ventileinrichtung ist geeignet, das aus elastischem Material ausgebildete Innenrohr in Vibration zu versetzen.

FR 2 115 663 offenbart ebenfalls eine ein Außenrohr und ein Innenrohr aufweisende Düse, wobei im Innenrohr der Düse ein konisch ausgebildeter und aus einem elastischen Material hergestellter Diffusor angeordnet ist. Der Diffusor ist über einen Kanal und eine Zuleitung aufblasbar mit einer Fluidquelle verbunden. Zum Verschließen der starren Innenleitung wird der Diffusor nunmehr aufgebläht.

Aufgabe der Erfindung ist es daher eine kostengünstige und aufgrund ihrer geringen Anzahl an Einzelteilen einfach herzustellende und zu fertigende Düse bereitzustellen, die die Nachteile des Standes der Technik beseitigt.

Diese Aufgabe wird bei einer Düse der eingangs genannten Art dadurch gelöst, dass das Innenrohr zumindest teilweise aus einem elastischen Material ausgebildet ist und im Ringspalt zwischen Innenrohr und Außenrohr eine Vorrichtung angeordnet ist, die einen Einlass für eine Fluidzufuhr und einen Auslass für eine Fluidabfuhr aufweist, wobei die Vorrichtung eine Schließ-Stellung zum Verschließen des Innenrohrs und zumindest eine Offen-Stellung aufweist, wobei in der zumindest einen Offen-Stellung zumindest der Fluidkanal für den zu versprühenden Stoff durchströmbar ist, und wobei die Vorrichtung derart ausgestaltet ist, dass das Volumen der Vorrichtung durch Fluidzufuhr oder Fluidabfuhr veränderbar ist, wodurch die Vorrichtung von der einen Schließ-Stellung des Innenrohrs in die zumindest eine Offen-Stellung des Innenrohrs verbringbar ist oder verbracht wird und umgekehrt.

Vorteilhafterweise ist es durch die Fluidzu- bzw. -abfuhr möglich die Vorrichtung in ihrem Volumen zu vergrößern bzw. zu verkleinern, d.h. zu verändern, sodass in der Schließ-Stellung zumindest der Fluidkanal geschlossen ist. Bevorzugt ist die Vorrichtung mit einer Regeleinrichtung verbunden, die die Fluidzufuhr oder Fluidabfuhr der Vorrichtung regelt, sodass das Volumen der Vorrichtung einstellbar ist oder eingestellt wird. Besonders bevorzugt ist oder wird das Volumen der Vorrichtung stufenlos einstellbar oder eingestellt. Durch die Regeleinrichtung ist die Fluidzu- bzw. -abfuhr regeloder steuerbar, insbesondere stufenlos. Dies hat den Vorteil, dass während des Herstellungs- bzw. Behandlungsprozesses unterschiedliche Prozessparameter, insbesondere strömungstechnischer Art, z. B. die Strömungsgeschwindigkeit im Fluidkanal und/oder Ringspalt oder der Volumenstrom des Fluidkanals und/oder des Ringspalts einstellbar sind, wodurch eine Anpassung der Sprayqualität erfolgen kann. Durch eine Vergrößerung des Volumens durch Fluidzufuhr der Vorrichtung wird zum Schließen des Fluidkanals für die Zuführung des zu versprühenden Stoffs das zumindest teilweise aus elastischem Material ausgebildete Innenrohr zusammengedrückt. Durch die Volumenvergrößerung wird zudem je nach Volumenvergrößerung der Ringspalt für das Gas, insbesondere das Zerstäubergas, zumindest teilweise verschlossen.

Weitere vorteilhafte Ausgestaltungen der bevorzugten Düse sind in den Unteransprüchen dargelegt.

Gemäß einer weiteren vorteilhaften Fortbildung weist die Vorrichtung eine maximale Offen-Stellung auf. Ganz besonders bevorzugt ist in der maximalen Offen-Stellung das Volumen der Vorrichtung minimal. Gemäß dieser Ausgestaltung besitzt die Vorrichtung ein minimales Volumen, sodass in dieser Stellung der Vorrichtung ein maximaler Volumenstrom an Gas sowie an zu versprühenden Stoff durch die Zuführungen strömt. Bevorzugt ist die Vorrichtung der Düse hierzu ringförmig um das Innenrohr herum ausgebildet. Bevorzugt ist die ringförmig ausgebildete Vorrichtung als Pressluftring ausgebildet.

Besonders bevorzugt umfasst die Düse mehrere Vorrichtungen, insbesondere zwei Vorrichtungen. Ganz besonders bevorzugt weist die Düse eine Vorrichtung für das Verschließen des Ringspalts und eine Vorrichtung für das Verschließen des Fluidkanals auf. Dies bietet die Möglichkeit den Volumenstrom des Gases, insbesondere des Zerstäubergases, und den Volumenstrom des zu versprühenden Stoffes unabhängig voneinander einzustellen, sodass während des Herstellungs- bzw. Sprühprozesses der Partikel eine noch bessere Einstellung der Sprayparameter vorgenommen werden kann und gleichzeitig sichergestellt werden kann, dass bspw. beim Befüllen der Prozessanlage, insbesondere eines Fluidisierungsapparates oder eines Trommelcoaters, die Austrittsöffnungen der Düse nicht verstopfen, indem sich dort zu behandelndes Gut ab- oder festsetzt. Bei dieser bevorzugten Ausführung gilt es zu beachten, dass zu Beginn eines jeden Sprühvorgangs zuerst das Gas, insbesondere das Zerstäubergas, aus der Düse strömen muss und anschließend der zu versprühende Stoff, insbesondere die Flüssigkeit. Beim Beenden des Sprühvorgangs ist zuerst die Zufuhr des zu versprühenden Stoffs zu stoppen und anschließend die des Gases. Hierdurch wird stets sichergestellt, dass zu Beginn eines jeden Sprühvorgangs der zu versprühende Stoff zerstäubt wird und am Ende eines jeden Sprühvorgangs kein zu versprühender Stoff unzerstäubt aus der Düse tropft.

Vorteilhafterweise ist am Innenrohr oder am Außenrohr ein Inlay angeordnet, wobei das Inlay so angeordnet ist, dass es durch den aus der Austrittsöffnung des Innenrohrs austretenden zu versprühenden Stoff, insbesondere eine Flüssigkeit, und/oder das aus der Austrittsöffnung des Außenrohrs ausströmende Gas, insbesondere Zerstäuberluft, in Bewegung, insbesondere eine Schwingung oder dgl., versetzbar ist oder versetzt wird, insbesondere in eine hochfrequente Schwingung. Bevorzugterweise hat die Schwingung eine Frequenz von 5 Hz bis 1500 Hz, besonders bevorzugt zwischen 25 Hz und 500 Hz, ganz besonders bevorzugt zwischen 25 Hz und 250 Hz. Durch die hochfrequente Bewegung des Inlays entstehen am Inlay Vibrationen mit einer bestimmten Frequenz, wodurch ein Anbacken des zu verdüsenden Stoffs, bevorzugt einer Flüssigkeit, ganz besonders bevorzugt einer Dispersion, am Düsenmundstück verhindert wird. Somit wird die Symmetrie und die Tröpfchengröße des Sprays während des Herstellungs- und/oder Sprühprozesses nicht durch ein Anbacken des zu versprühenden Stoffes beeinflusst, sodass es nicht zu einer unerwünschten Sprühtrocknung und/oder zu lokaler Überfeuchtung und Agglomeration kommt.

Nach einer diesbezüglich vorteilhaften Ausgestaltung der erfindungsgemäßen Düse ist das Inlay an der Innenwandung oder an einer Außenwandung oder in einer Wandung des Innenrohrs angeordnet und ragt zumindest teilweise in einen Austrittsbereich des zu versprühenden Stoffs und/oder des Gases hinein. Bei einer zusätzlichen bevorzugten Fortbildung der Erfindung ist das Inlay an der Innenwandung oder an einer Außenwandung oder in einer Wandung des Außenrohrs angeordnet und ragt zumindest teilweise in einen Austrittsbereich des zu versprühenden Stoffs und/oder des Gases hinein. Durch eine derartige Anordnung wird das zumindest teilweise in einen Austrittsbereich des zu versprühenden Stoffs und/oder des Gases hineinragende Inlay besonders gut in Schwingung versetzt, sodass ein Anbacken des zu versprühenden Stoffes im Bereich des Düsenmunds deutlich reduziert oder sogar ganz verhindert wird, damit stets die Symmetrie und die optimale Tröpfchengröße des Sprays während des Herstellungs- und/oder Sprühprozesses sichergestellt wird.

Bevorzugt sind das Außenrohr und das Innenrohr koaxial um eine Achse angeordnet. Besonders bevorzugt sind das Außenrohr und das Innenrohr dergestalt zueinander angeordnet, dass die Austrittsöffnung des Außenrohrs konzentrisch zur Austrittsöffnung des Innenrohrs angeordnet ist. Hierdurch wird die Strömungsführung, insbesondere die Strömungsführung des Gases im Ringspalt deutlich verbessert, so dass die Spraysymmetrie und die Tröpfchengröße optimal einstellbar sind.

Darüber hinaus ist das Inlay austauschbar anordenbar oder angeordnet. Durch den Austausch des Inlays kann direkt auf den Herstellungs- und/oder Sprühprozess Einfluss genommen werden, bspw. indem das Inlay bspw. an den zu verdüsenden Stoff angepasst wird. Ist der zu versprühende Stoff, insbesondere eine Flüssigkeit, bspw. ein abrasiver Stoff bzw. eine Säure oder eine Base kann das Inlay-Material einfach an die neuen Prozessbedingungen adaptiert werden. Auch im Hinblick auf strenge Prozessvorgaben besonders in der pharmazeutischen Industrie oder der Lebensmittel-Industrie, zum Beispiel in Bezug auf die Produktreinheit und/oder Lebensmittelverträglichkeit, ist ein schneller und einfacher Austausch des Inlays von gro-ßem Vorteil und Nutzen.

Bevorzugt ist ein Teilabschnitt des Inlays längenveränderbar. Aufgrund der Längenveränderbarkeit des Teilabschnitts des Inlays, der zumindest teilweise aus dem Innenrohr oder dem Außenrohr der Düse herausragt ist es möglich die Beweglichkeit des Teilabschnitts, insbesondere die Frequenz der Vibration des Teilabschnitts des Inlays, zu verändern und während des Herstellungs- und/oder Sprühprozesses bspw. an veränderte Prozessbedingungen anzupassen. Hierdurch kann direkt auf den Herstellungs- und/oder Sprühprozess Einfluss genommen werden, indem die Vibrationsfrequenz des Inlays an den zu versprühenden Stoff, insbesondere eine Flüssigkeit, beispielsweise ein hochviskoses Fluid oder an eine Suspension, Emulsion oder dergleichen angepasst wird oder anpassbar ist. Hierdurch wird verhindert, dass das Ablagerungen am Düsenmundstück entstehen. Werden die Düsen, insbesondere deren Düsenmundstück durch Sensorik, bspw. durch eine Kamera, überwacht ist es zudem möglich online während des ablaufenden Prozesses die Frequenz zu ändern, sodass Anbackungen verhindert werden.

Nach einer zusätzlichen vorteilhaften Fortbildung sind das Inlay und das Innenrohr als einstückige Leitung ausgebildet. Dies hat den Vorteil, dass die innere Leitung bei einer Umstellung von einem ersten Herstellungs- bzw. Behandlungsprozess auf einen zweiten Herstellungs- bzw. Behandlungsprozess als Ganzes austauschbar ist und sich daher ideal für pharmazeutische Prozesse eignet. Zudem ist das Inlay so stets optimal an den Herstellungs- bzw. Behandlungsprozess angepasst und das Innenrohr muss bei einer Umstellung des Herstellungs- bzw. Behandlungsprozesses nicht gereinigt werden. Es wird durch die vorteilhafte Ausgestaltung ein kostengünstiges und dennoch optimal ausgestaltetes Bauteil für die Düse hergestellt.

In einer zusätzlichen Ausgestaltung der erfindungsgemäßen Düse ist das Inlay aus mindestens einem elastischen Material hergestellt, vorzugsweise aus einem Polymer. Bevorzugt ist das mindestens eine Polymer ein synthetisches Polymer, insbesondere ein Silikon. Polymere sind vielseitige Materialien, die bspw. kostengünstig herstellbar, sehr robust aber auch je nach Polymer sehr temperaturbeständig sind. Die Polymere, insbesondere die synthetischen Polymere, sind daher sehr gut als Inlay für die unterschiedlichsten Prozesse und zu versprühenden Stoffe geeignet.

Bevorzugt ist im Bereich des Düsenmundstückes zwischen dem Außenrohr und dem Innenrohr ein Anbauteil in Form von Drallkörpern, Drallblechen oder dergleichen zur Gasführung angeordnet. Besonders bevorzugt ist das Anbauteil zur Führung des Innenrohrs angeordnet. Ganz besonders bevorzugt ist das Anbauteil mit dem Innenrohr und/oder dem Außenrohr fest verbunden. Durch den Einbau eines Anbauteils in Form von Drallkörpern, Drallblechen oder dergleichen kann die Strömungsführung des Gases, insbesondere der Zerstäuberluft, am Düsenmundstück beeinflusst werden, wodurch das Bewegungs- und Schwingungsverhalten, insbesondere die Vibrationsfrequenz des Teilabschnitts des Inlays, des zumindest teilweise aus dem Innenund/oder Außenrohr herausragenden Inlays veränderbar ist. Hierdurch sind die Sprühsymmetrie und die Tröpfchengröße des Sprays, d. h. der zu verdüsenden Flüssigkeit, direkt einstellbar. Des Weiteren wird das Innenrohr beim Einbau im Außenrohr geführt und stets in der gewünschten Position gehalten. Zudem verhindert das Anbauteil ein Schwingen des Innenrohrs, was zu einer Veränderung der Maße der Austrittsöffnungen sowohl des Innenrohrs als auch des Außenrohrs führt, was die Strömungsverhältnisse des zu versprühenden Stoffs und des Gases am Düsenmundstück ändert und somit auch die Spraysymmetrie und die Tröpfchengröße.

Bevorzugt weist das Inlay eine variierbare Wandstärke auf. Die Wandstärke des Inlays, insbesondere des aus dem Innenrohr herausragenden Teilabschnitts des Inlays, kann an den zu versprühenden Stoff, insbesondere eine zu versprühende Flüssigkeit, angepasst werden, wodurch das Sprühverhalten, vorzugsweise die Spraysymmetrie und die Einstellung der Tröpfchengröße, der erfindungsgemäßen Düse optimiert werden kann.

Durch die Änderung der Wandstärke bei gleicher Länge des zumindest teilweise aus dem Innenrohr und/oder dem Außenrohr herausragenden Inlays wird das Schwingungsverhalten verändert, wodurch das Inlay speziell an den jeweiligen verfahrenstechnischen Prozess anpassbar ist oder angepasst wird.

Nachfolgend wird die Erfindung anhand der beiliegenden Zeichnung näher erläutert. Es zeigen
- Figur 1: eine Düse gemäß dem Stand der Technik,
- Figur 2: einen Schnitt B-B gemäß Fig. 4 durch eine erste Ausführungsform einer bevorzugten Düse,
- Figur 3: eine Detailansicht eines Teils des Düsenmundstücks einer Ausführungsform einer nicht erfindungsgemäßen Düse gemäß Ausschnitt A von Figur 2,
- Figur 4: eine Draufsicht auf die Ausführungsform der nicht erfindungsgemäßen Düse gemäß Figur 2 mit einer die Achse X-X schneidenden Schnittebene B-B,
- Figur 5: einen Schnitt durch eine weitere Ausführungsform einer nicht erfindungsgemäßen Düse mit einem Anbauteil im Ringspalt in Form eines Drallblechs zur Gasführung,
- Figur 6: einen Schnitt durch eine weitere Ausführungsform einer nicht erfindungsgemäßen Düse mit einem Anbauteil in Form eines Drallblechs zur Gasführung im Ringspalt,
- Figur 7: einen Schnitt durch eine weitere Ausführungsform einer nicht erfindungsgemäßen Düse,
- Figur 8: einen Schnitt durch eine weitere Ausführungsform einer nicht erfindungsgemäßen Düse,
- Figur 9: einen Schnitt durch eine weitere Ausführungsform einer nicht erfindungsgemäßen Düse,
- Figur 10: einen Schnitt durch eine weitere Ausführungsform einer nicht erfindungsgemäßen Düse,
- Figur 11: einen Schnitt durch eine nicht erfindungsgemäße Düse gemäß der Ausführungsform nach Fig. 2, wobei die Düse eine in axialer Richtung verschiebbare Düsennadel zum Verschließen der Austrittsöffnungen der Düse aufweist,
- Figur 12: einen Schnitt durch eine nicht erfindungsgemäßen Düse, wobei das Inlay und das Innenrohr eine einstückige innere Leitung der bevorzugten Düse ausbilden,
- Figur 13: einen Schnitt durch eine bevorzugte Düse, wobei das Inlay und das Innenrohr eine innere Leitung der bevorzugten Düse ausbilden und die bevorzugte Düse im Bereich des Düsenmundstücks zwischen Innen- und Außenrohr eine ihr Volumen veränderbare Vorrichtung aufweist, wobei die Vorrichtung in Fig. 13 eine Offen-Stellung der bevorzugten Düse zeigt,
- Figur 14: einen Schnitt durch eine bevorzugte Düse, wobei das Inlay und das Innenrohr eine innere Leitung der bevorzugten Düse ausbilden und die bevorzugte Düse im Bereich des Düsenmundstücks zwischen Innen- und Außenrohr eine ihr Volumen veränderbare Vorrichtung aufweist, wobei die Vorrichtung in Fig. 14 eine Schließ-Stellung der bevorzugten Düse darstellt,
- Figur 15: einen schematischen Aufbau eines nicht erfindungsgemäßen Verfahrens zur Überwachung des Düsenmundstücks einer Ausführungsform der nicht erfindungsgemäßen Düse nach Fig. 2 und
- Figur 16: einen schematischen Aufbau eines weiteren nicht erfindungsgemäßen Verfahrens zur Überwachung des Düsenmundstücks der Ausführungsform der nicht erfindungsgemäßen Düse nach Fig. 2.

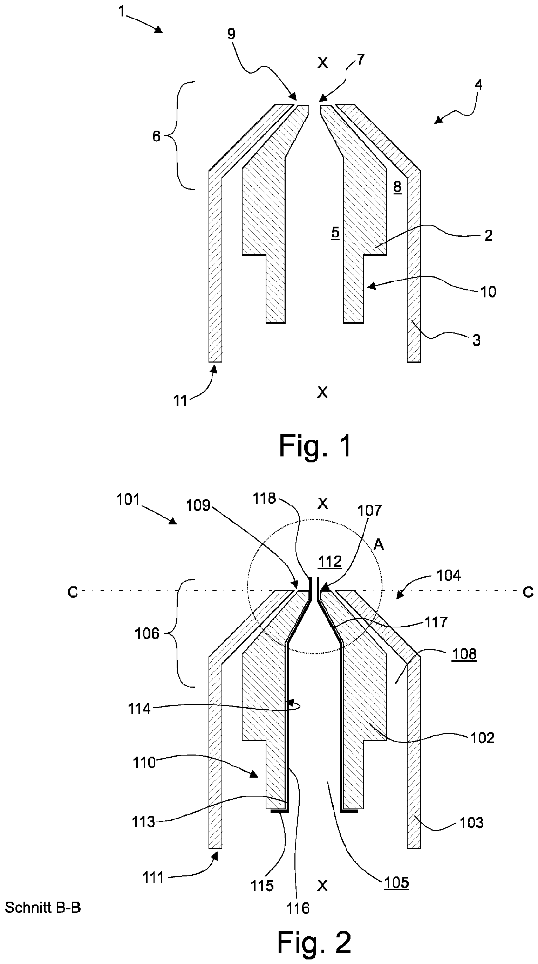

In Fig. 1 wird eine aus dem Stand der Technik bekannte Düse 1 dargestellt. Die Düse 1 umfasst einen ein Innenrohr 2 und ein Außenrohr 3 aufweisenden Düsenkörper 4. Das Innenrohr 2 und das Außenrohr 3 sind hierbei koaxial zu einer Achse X-X angeordnet.

Das Innenrohr 2 weist einen zur Zuführung für den zu versprühenden Stoff, bevorzugt einer Flüssigkeit, ganz besonders bevorzugt einer Dispersion, Suspension oder Emulsion, ausgebildeten Fluidkanal 5 auf. Dieser mündet im Bereich des Düsenmundstückes 6 in eine Austrittsöffnung 7 des Innenrohrs 2. Im der Austrittsöffnung 7 des Innenrohrs 2 abgewandten Bereich weist das Innenrohr 2 eine Anschlussstelle 10 für eine nicht dargestellte Zuführungsleitung für den zu versprühenden Stoff auf.

Das Außenrohr 3 ist zum Innenrohr 2 beanstandet angeordnet, wodurch sich ein Ringspalt 8 zur Zuführung für das Gas, insbesondere Zerstäubungsluft, ausbildet. Der Ringspalt 8 mündet im Bereich des Düsenmundstückes 6 in eine Austrittsöffnung 9 des Außenrohrs 3. Im der Austrittsöffnung 9 des Außenrohrs 3 abgewandten Bereich weist das Außenrohr 3 eine Anschlussstelle 11 für eine nicht dargestellte Zuführungsleitung für das Gas auf.

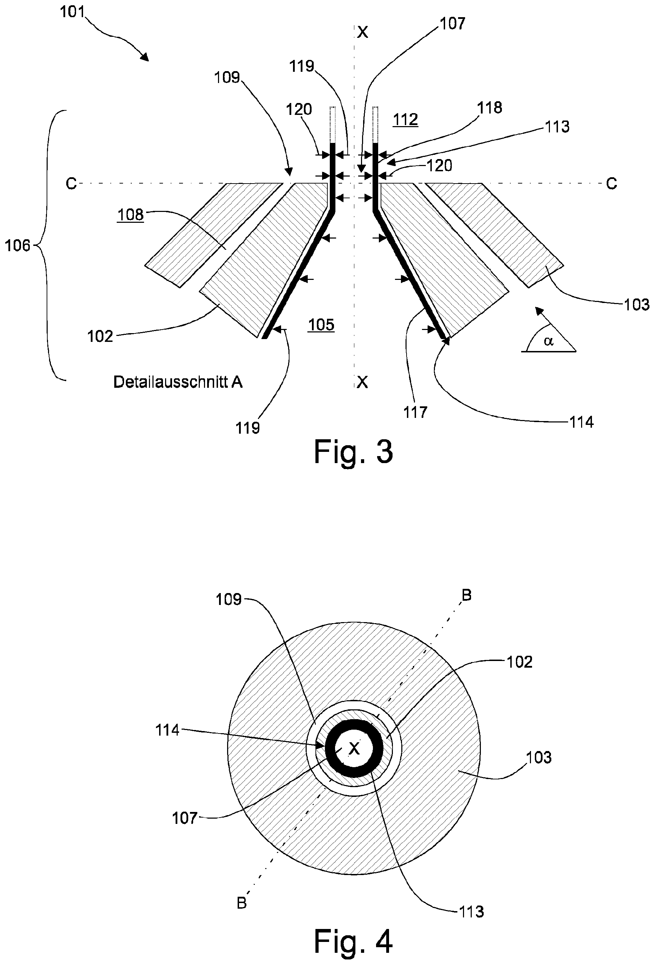

Fig. 2 zeigt einen Schnitt B-B gemäß Fig. 4 durch eine erste Ausführungsform einer nicht erfindungsgemäßen Düse 101. Die Düse 101 umfasst, wie schon in Fig. 1 dargestellt, einen ein Innenrohr 102 und ein Außenrohr 103 aufweisenden Düsenkörper 104. Das Innenrohr 102 und das Außenrohr 103 sind koaxial zu einer Achse X-X angeordnet.

Das Innenrohr 102 weist einen Fluidkanal 105 zur Zuführung für den zu versprühenden Stoff, bevorzugt einer Flüssigkeit, ganz besonders bevorzugt einer Dispersion, Suspension oder Emulsion, auf. Dieser mündet im Bereich des Düsenmundstücks 106 in eine Austrittsöffnung 107 des Innenrohrs 102. In dem der Austrittsöffnung 107 des Innenrohrs 102 abgewandten Bereich weist das Innenrohr 102 eine Anschlussstelle 110 für eine nicht dargestellte Zuführungsleitung für den zu versprühenden Stoff auf.

Das Außenrohr 103 ist zum Innenrohr 102 beanstandet angeordnet, wodurch sich ein Ringspalt 108 zur Zuführung für das Gas, insbesondere Zerstäubungsluft, ausbildet. Der Ringspalt 108 mündet im Bereich des Düsenmundstückes 106 in eine Austrittsöffnung 109 des Außenrohrs 103. Bevorzugt sind die Austrittsöffnung 107 des Innenrohrs 102 und die Austrittsöffnung 109 des Außenrohrs 103 konzentrisch zueinander angeordnet. Hierdurch wird sichergestellt, dass die Strömungsverhältnisse des im Ringspalt 108 geförderten Gases optimal, insbesondere gleichmäßig, ausgebildet sind, sodass Symmetrie und Tröpfchengröße des mittels der Düse 101 erzeugten Sprays genau auf die Anforderungen des Herstellungs- und/oder Sprühprozesses, insbesondere eines Herstellungs- und/oder SprühProzesses für Granulate, Tabletten oder dgl., abgestimmt sind. Im der Austrittsöffnung 109 des Außenrohrs 103 abgewandten Bereich ist eine Anschlussstelle 111 für eine nicht dargestellte Zuführungsleitung für das Gas gegeben. Bevorzugterweise liegen die Austrittsöffnungen 107, 109 in einer Ebene C-C und münden in den Austrittsbereich 112 der Düse 101. Im Austrittsbereich 112 wird durch das Aufeinandertreffen von zu versprühendem Stoff und Zerstäubergas das Spray erzeugt, das die Partikel beschichtet. Vorteilhafterweise werden sowohl die Symmetrie als auch die Tröpfchengröße des Sprays während des Herstellungs- und/oder Sprühprozesses optimal eingestellt.

Das Innenrohr 102 weist ein Inlay 113 auf. Das Inlay 113 ist in Fig. 2 in seiner bevorzugten Position an einer Innenwandung 114 des Innenrohrs 102 angeordnet. Das Inlay 113 ist bevorzugt aus einem Polymer, besonders bevorzugt aus einem synthetischen Polymer, ganz besonders bevorzugt aus einem Silikon, hergestellt. Polymere sind vielseitige Materialien, die bei gleichzeitiger hoher Robustheit kostengünstig herstellbar sind und je nach Polymer sehr temperaturbeständig sein können. Die Polymere, insbesondere die synthetischen Polymere, sind daher sehr gut als Inlay 113 für die unterschiedlichsten Herstellungs- und/oder Sprühprozesse geeignet. Die Düse 101 ist aufgrund der Austauschbarkeit des Inlays 113 in den unterschiedlichsten Herstellungs- und/oder Sprühprozessen einsetzbar.

Das Inlay 113 weist in der ersten Ausführungsform der Düse 101 vier Teilabschnitte 115 bis 118 auf. Teilabschnitt 115 sichert das Inlay 113 in der Düse 101, sodass das Inlay 113 während des gesamten Herstellungs- und/oder Sprühprozesses in der Düse 101 angeordnet ist. Vorteilhafterweise wird das Inlay 113 mit dem Innenrohr 102 so verbunden, dass dieses dort fixiert ist. Die Teilabschnitte 116 und 117 sind in der Düse 101 zwischen dem Teilabschnitt 115 und dem Teilabschnitt 118 angeordnet und liegen an der Innenwandung 114 des Innenrohrs 102 an. Der Teilabschnitt 118 des Inlays 113 ragt zumindest teilweise aus der Austrittsöffnung 107 des Innenrohrs 102 heraus. Durch die Möglichkeit der Verstellung des Haltepunkts des Teilabschnitts 115 am Innenrohr 102 kann die Länge des aus der Austrittsöffnung 107 des Innenrohrs 102 herausragenden Teilabschnitts 118 des Inlays 113 verändert werden.

Fig. 3 zeigt eine Detailansicht eines Teils des Düsenmundstücks 106 der ersten Ausführungsform der Düse 101 gemäß Ausschnitt A von Fig. 2. Das Innenrohr 102 und das Außenrohr 103 sind koaxial um die Achse X-X angeordnet, so dass die Austrittsöffnungen 107, 109 konzentrisch um den Schnittpunkt der Achse X-X mit der Ebene C-C angeordnet sind. Die Austrittsöffnung 107 des Innenrohrs 102 und die Austrittsöffnung 109 des Außenrohrs 103 liegen zudem in der Ebene C-C und münden in den Austrittsbereich 112 der Düse 101. Im Austrittsbereich 112 wird durch das Aufeinandertreffen von zu versprühendem Stoff und Zerstäubergas das Spray erzeugt, das die Partikel beschichtet. Vorteilhafterweise werden sowohl die Symmetrie als auch die Tröpfchengröße des Sprays während des Herstellungs- und/oder Sprühprozesses optimal eingestellt.

Der Teilabschnitt 117 des Inlays 113 liegt an der Innenwandung 114 des Innenrohrs 102 der Düse 101 an und ist mit dem Teilabschnitt 118 des Inlays 113 verbunden. Der Teilabschnitt 118 des Inlays 113 ragt zumindest teilweise aus der Austrittsöffnung 107 des Innenrohrs 102 der bevorzugten Düse 101 heraus. Bevorzugt ist der Teilabschnitt 118 des Inlays 113 längenveränderbar. Die Längenveränderbarkeit ist durch die an den Teilabschnitt 118 angrenzende, gepunktete Linie dargestellt. Die Längenveränderung kann entweder durch das Austauschen des Inlays 113 direkt erfolgen, durch Verstellung des Haltepunkts des Inlays 113 am Innenrohr 102 und/oder eine sonstige Änderung der Anordnung des Inlays 113 in der Düse 101.

Durch den zu versprühenden Stoff, bevorzugt eine Flüssigkeit, besonders bevorzugt eine Dispersion, Suspension oder Emulsion, der durch das ein Inlay 113 aufweisendes Innenrohr 102 im Fluidkanal 105 in Richtung Austrittsöffnung 107 gefördert wird, wirkt ein Innendruck 119 auf das Inlay 113. Durch den auf das Inlay 113 wirkenden Innendruck 119 wird das Inlay 113 gegen die Innenwandung 114 des Innenrohrs 102 gepresst. Im Bereich des Düsenmundstücks 106, insbesondere im Bereich der Austrittsöffnung 107 des Innenrohrs 102, wirkt auf den Teilabschnitt 118 des Inlays 113 durch den auf das Inlay 113 wirkenden Innendruck 119 ebenfalls eine das Inlay 113 von der Achse X-X wegbewegende Kraft.

Zudem wirkt auf den aus der Austrittsöffnung 107 des Innenrohrs 102 zumindest teilweise herausragenden Teilabschnitt 118 des Inlays 113 eine in Richtung der Achse X-X wirkende Kraft 120. Die in Richtung der Achse X-X wirkende Kraft 120 wird von dem aus dem Ringspalt 108 aus der Austrittsöffnung 109 austretenden Gas, insbesondere Zerstäuberluft, verursacht.

Hierdurch wird das zumindest teilweise aus der Austrittsöffnung 107 des Innenrohrs 102 herausragende Inlay 113 durch die aus der Düse 101 in den Austrittsbereich 112 der Düse 101 austretende Flüssigkeit und/oder das aus der Düse 101 in den Austrittsbereich 112 der Düse 101 austretende Gas, insbesondere Zerstäuberluft, bewegt, vorteilhafterweise hochfrequent. Durch diese vorteilhafterweise hochfrequente Bewegung des zumindest teilweise aus der Austrittsöffnung 107 des Innenrohrs 102 herausragenden Inlays 113 werden Ablagerungen der zu verdüsenden Flüssigkeit am Düsenmundstück 106, insbesondere im Austrittsbereich 112, bzw. wird deren Agglomeration verhindert. Die Symmetrie und die Tröpfchengröße des Sprays wird somit während des Herstellungs- und/oder Sprühprozesses nicht beeinflusst, sodass es nicht zu einer unerwünschten Sprühtrocknung und/oder zu lokaler Überfeuchtung und Agglomeration kommt.

Die Vibrationsfrequenz des Teilabschnitts 118 des Inlays 113 kann zusätzlich zum Beispiel durch die Längenveränderbarkeit des Teilabschnitts 118 des Inlays 113 verändert werden. Hierdurch kann direkt auf den Herstellungs- bzw. Sprühprozess Einfluss genommen werden. Eine weitere Änderung der Vibrationsfrequenz ist bspw. durch Anpassung der Drücke von zu versprühendem Stoff und Gas möglich. Auch eine Veränderung des Anströmwinkels α des Gases, insbesondere der Zerstäuberluft, bewirkt eine Änderung der Vibrationsfrequenz des Inlays 113 und hat somit Einfluss auf das Spray und dessen Qualität, insbesondere hinsichtlich der Symmetrie und der Tröpfchengrö-ße. Zur Änderung des Anströmwinkels α des Gases ist bspw. die Anordnung von Außenrohr 103 und zu Innenrohr 102 zueinander anzupassen, insbesondere im Bereich des Düsenmundstücks 106. Darüber hinaus kann die Anströmung des Inlays 113 auch die durch eine veränderte Strömungsführung im Ringspalt 108 angepasst werden. Ganz bevorzugt wird lediglich der Ringspalt 108 angepasst, sodass dieser einen anderen Anströmwinkel in Bezug auf den Teilabschnitt 118 des Inlays 113 aufweist.

Fig. 4 zeigt eine Draufsicht auf die erste Ausführungsform einer Düse 101 mit einer die Achse X-X schneidenden Schnittebene B-B. Das Innenrohr 102 und das Außenrohr 103 sind koaxial zur Achse X-X ausgerichtet, sodass die Austrittsöffnungen 107, 109 für den zu versprühen Stoff, insbesondere eine Flüssigkeit, ganz besonders bevorzugt eine Dispersion, bzw. für das Gas, insbesondere Zerstäuberluft, konzentrisch zueinander um die Achse X-X angeordnet sind. An der Innenwandung 114 des Innenrohrs 102 ist das Inlay 113 angeordnet.

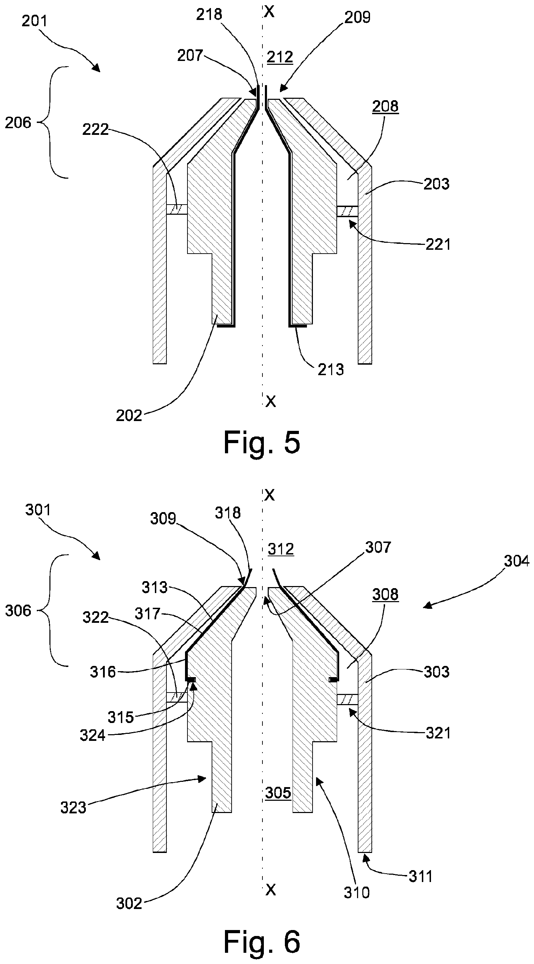

In Fig. 5 ist ein Schnitt durch eine zweite Ausführungsform einer nicht erfindungsgemäßen Düse 201 mit einem optionalen Anbauteil 220 im Ringspalt 208 in Form eines Drallblechs zur Gasführung dargestellt.

Die Düse 201 gemäß der zweiten Ausführungsform entspricht in ihrem grundlegenden Aufbau der in den Fign. 2 bis 4 gezeigten ersten Ausführungsform der Düse 101. Der Unterschied zwischen den beiden Ausführungsformen ist, dass die Düse 201 im Gegensatz zur Düse 101 ein optionales Anbauteil 221 aufweist, welches in Form eines Drallblechs zur Gasführung ausgebildet ist. In der vorliegenden zweiten Ausführungsform der Düse 201 weist das Anbauteil 221 Öffnungen 222 auf, die winklig zum parallel zum Außenrohr 203 strömenden Gas, insbesondere einer Zerstäuberluft, ausgebildet sind. Hierdurch erfährt das im Ringspalt 208 strömende Gas einen Drall um die Achse X-X. Durch den Drall um die Achse X-X kann die Anströmung und das Bewegungsverhalten und somit auch die Vibrationsfrequenz des zumindest teilweise aus der Austrittsöffnung 207 des Innenrohrs 202 herausragenden Inlays 213 beeinflusst werden.

Das Anbauteil 221 kann ebenso in Form von Drallkörpern, z. B. Strömungsleitblechen oder dergleichen, zur Gasführung ausgebildet sein. Das Anbauteil 222 ist mit dem Innenrohr 202 und dem Außenrohr 203 bevorzugt fest verbunden. Hierdurch wird die Stabilität der Düse 201 im Bereich des Düsenmundstücks 206 erhöht. Zudem wird durch den Einbau eines Anbauteils 221 in Form von Drallkörpern, Drallblechen oder dergleichen die Strömungsführung des Gases, insbesondere der Zerstäuberluft, am Düsenmundstück 206, insbesondere im Austrittsbereich 212 der Düse 201 beeinflusst, wodurch das Bewegungsverhalten des zumindest teilweise aus dem Innenrohr 202 herausragenden Inlays 213, insbesondere die Vibrationsfrequenz des Teilabschnitts des Inlays 213, veränderbar ist. Die Vibrationsfrequenz ist so verbessert auf den Herstellungsund/oder Sprühprozess einstellbar. Zusätzlich sind hierdurch die Sprühsymmetrie und die Tröpfchengröße des Sprays, d. h. des zu verdüsenden Stoffs, bevorzugt einer Flüssigkeit, ganz besonders bevorzugt einer Dispersion, Emulsion oder Suspension, direkt einstellbar. Des Weiteren wird das Innenrohr 202 beim Einbau im Außenrohr 203 geführt und stets in der gewünschten Position, in Fig. 5 in einer konzentrischen Position um die Achse X-X, gehalten. Zudem verhindert das Anbauteil 221 ein Schwingen des Innenrohrs 102, was zu einer Veränderung sowohl der Austrittsöffnungen 207 des Innenrohrs 202 als auch der Austrittsöffnungen 209 des Außenrohrs 203 führt, was die Strömungsverhältnisse am Düsenmundstück 206, insbesondere im Austrittsbereich 212 der Düse 201 ändert und somit auch die Spraysymmetrie und die Tröpfchengröße des Sprays beeinflusst.

Bevorzugt weist das zumindest teilweise aus der Austrittsöffnung 207 des Innenrohrs 202 herausragende Inlay 213 eine variierbare Wandstärke auf. Die Wandstärke des Inlays 213, insbesondere des aus dem Innenrohr 202 herausragenden Teilabschnitts 218, kann an den zu versprühenden Stoff, bevorzugt eine Flüssigkeit, besonders bevorzugt eine Dispersion, Emulsion oder Suspension, angepasst werden, wodurch das Sprühverhalten, vorzugsweise die Spraysymmetrie und die Einstellung der Tröpfchengröße, der Düse 201 optimiert werden kann. Auch an abrasive zu versprühende Stoffe kann so das Inlay 213 angepasst werden. Durch die Änderung der Wandstärke bei gleicher Länge des zumindest teilweise aus dem Innenrohr 202 herausragenden Inlays 213 oder durch Anpassung der Länge des Inlays 213 bei gleichbleibender Wandstärke des Inlays 213 wird das Schwingungsverhalten des zumindest teilweise aus der Austrittsöffnung 207 herausragenden Teilabschnitts 218 verändert, wodurch das verwendete Inlay 213 speziell an den jeweiligen verfahrenstechnischen Prozess anpassbar ist. Vorteilhafterweise wird das Inlay 213 mit dem Innenrohr 202 so verbunden, dass dieses dort fixiert ist.

Fig. 6 zeigt einen Schnitt durch eine weitere, dritte Ausführungsform einer nicht erfindungsgemäßen Düse 301 mit einem optionalen Anbauteil 321 im Ringspalt 308 in Form eines Drallblechs zur Gasführung.

Die Düse 301 umfasst einen ein Innenrohr 302 und ein Außenrohr 303 aufweisenden Düsenkörper 304, wobei das Innenrohr 302 und das Außenrohr 303 koaxial zu einer Achse X-X ausgerichtet sind.

Das Innenrohr 302 weist einen zur Zuführung für den zu versprühenden Stoff ausgebildeten Fluidkanal 305 auf. Dieser mündet im Bereich des Düsenmundstückes 306 in eine Austrittsöffnung 307 des Innenrohrs 302. Im der Austrittsöffnung 307 des Innenrohrs 302 abgewandten Bereich weist das Innenrohr 302 eine Anschlussstelle 310 für eine nicht dargestellte Zuführungsleitung für den zu versprühenden Stoff, bevorzugt eine Flüssigkeit, ganz besonders bevorzugt eine Dispersion, Emulsion oder Suspension, auf.

Das Außenrohr 303 ist zum Innenrohr 302 beabstandet angeordnet, wodurch sich ein Ringspalt 308 zur Zuführung für das Gas, insbesondere Zerstäubungsluft, ausbildet. Der Ringspalt 308 mündet im Bereich des Düsenmundstückes 306 in eine Austrittsöffnung 309 des Außenrohrs 303. Im der Austrittsöffnung 309 des Außenrohrs 303 abgewandten Bereich weist das Außenrohr 303 eine Anschlussstelle 311 für eine nicht dargestellte Zuführungsleitung für das Gas auf.

Zwischen dem Innenrohr 302 und dem Außenrohr 303 ist ein Öffnungen 322 aufweisendes Anbauteil 321 angeordnet. Das Anbauteil 321 verbindet Innenrohr 302 und Außenrohr 303 bevorzugt fest miteinander. Durch das Anbauteil 321 wird dem durch den Ringspalt 308 strömenden Gas, insbesondere Zerstäuberluft, ein Drall aufgeprägt. Mittels des Dralls wird die Frequenz des zumindest teilweise aus der Austrittsöffnung 309 des Außenrohrs 303 herausragenden Inlays 313 beeinflusst. Das Inlay 313 ist an der Außenwandung 323 im Ringspalt 308 angeordnet und liegt an der Außenwandung 323 an.

Das zumindest teilweise aus der Austrittsöffnung 309 des Außenrohrs 303 in den Austrittsbereich 312 herausragende Inlay 313 weist vier Teilabschnitte 315, 316, 317 und 318 auf. Teilabschnitt 315 ist in einer an der Außenwandung 323 angeordneten Nut 324 fixiert, bspw. verklemmt. Die Teilabschnitte 316 und 317 verbinden die Teilabschnitte 315 und 318. Die Länge des Inlays 313 ist veränderbar, insbesondere die Länge des Teilabschnitts 318 des Inlays 313 ist an die Parameter des Herstellungs- und/oder Sprühprozesses anpassbar. Zudem ist die Wandstärke des zumindest teilweise aus der Austrittsöffnung 309 des Außenrohrs 303 in den Austrittsbereich 312 ragenden Inlays 313, insbesondere die Wandstärke des Teilabschnitts 318 des Inlays 313, an die verfahrenstechnischen Prozessparameter adaptierbar. In Fig. 6 nimmt die Wandstärke des Inlays 313 von Teilabschnitt 315 zu Teilabschnitt 318 hin ab.

Das zumindest teilweise aus der Austrittsöffnung 309 des Außenrohrs 303 in den Austrittsbereich 312 herausragende Inlay 313 wird durch den aus der Düse 301 austretenden zu versprühenden Stoff, insbesondere eine Flüssigkeit, und/oder das aus der Düse 301 austretende Gas, insbesondere Zerstäuberluft, insbesondere hochfrequent bewegt. Durch die insbesondere hochfrequente Bewegung bzw. Schwingung des zumindest teilweise aus der Austrittsöffnung 309 des Außenrohrs 303 in den Austrittsbereich 312 herausragenden Inlays 313 entstehen am Inlay 313 Vibrationen mit einer bestimmten Frequenz, wodurch ein Anbacken und/oder Anhaften des zu verdüsenden Stoffs, bevorzugt einer Flüssigkeit, ganz besonders bevorzugt einer Dispersion, Emulsion oder Suspension, was zu Ablagerungen am Düsenmundstück 306 führt, verhindert wird. Durch das Verhindern von Ablagerungen am Düsenmundstück 306 im Austrittsbereich 312 und/oder durch das Verhindern von Agglomeration des zu versprühenden Stoffs wird die Symmetrie und die Tröpfchengröße des Sprays während des Herstellungs- und/oder Sprühprozesses nicht beeinflusst, sodass es nicht zu einer unerwünschten Sprühtrocknung und/oder zu lokaler Überfeuchtung und Agglomeration kommt.

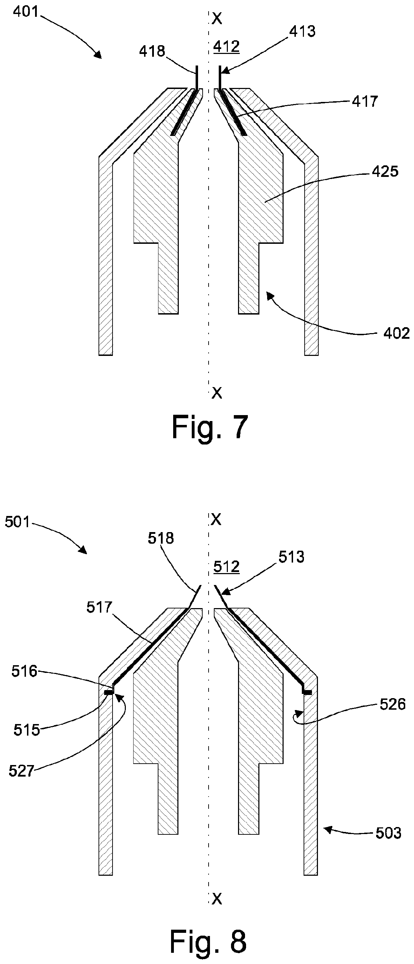

Die Fign. 7 bis 10 zeigen weitere vier Ausführungsformen der nicht erfindungsgemäßen Düse 401, 501, 601, 701 als Schnittdarstellung, deren Bauform sich im Allgemeinen nicht von der ersten Ausführungsform der Düse 101 unterscheidet. Im Speziellen unterscheiden sich die Ausführungsformen von der ersten Ausführungsform der Düse 101 dadurch, dass das Inlay 413, 513, 613 und 713 an einer anderen Position am Innenrohr 402, 502, 602, 702 oder Außenrohr 403, 503, 603, 703 angeordnet ist. Im Folgenden werden die vier Ausführungsformen der Düse 401, 501, 601, 701 näher erläutert.

Hierbei ist in Fig. 7 ein Schnitt durch eine vierte Ausführungsform einer Düse 401 dargestellt. Das Inlay 413 ist in der vierten Ausführungsform der Düse 401 in einer Wandung 425 des Innenrohrs 402 angeordnet und dessen Teilabschnitt 418 ragt in den Austrittsbereich 412 der Düse 401 hinein. Das Inlay 413 weist gemäß der vierten Ausführungsform zwei Teilabschnitte 417 und 418 auf, wobei der Teilabschnitt 417 der Befestigung des Inlays 413 in der Wandung 424 des Innenrohrs 402 dient. Vorteilhafterweise wird das Inlay 413 in der Wandung 425 des Innenrohr 402 verklemmt oder dgl., sodass dieses dort fixiert ist.

In Fig. 8 ist ein Schnitt durch die fünfte Ausführungsform einer Düse 501 gezeigt. Entsprechend der Fig. 8 ist das Inlay 513 in der fünften Ausführungsform der Düse 501 an einer Innenwandung 526 des Außenrohrs 503 angeordnet. Das Inlay 513 weist hierbei vier Teilabschnitte 515, 516, 517 und 518 auf, wobei der Teilabschnitt 518 aus einer Austrittsöffnung 509 eines Außenrohrs 503 zumindest teilweise in einen Austrittsbereich 512 ragt. Das Inlay 513 ist mittels des Teilabschnitts 515 in einer Nut 527 in der Innenwandung 526 des Außenrohrs 503 angeordnet und wird dort bspw. durch verpressen fixiert.

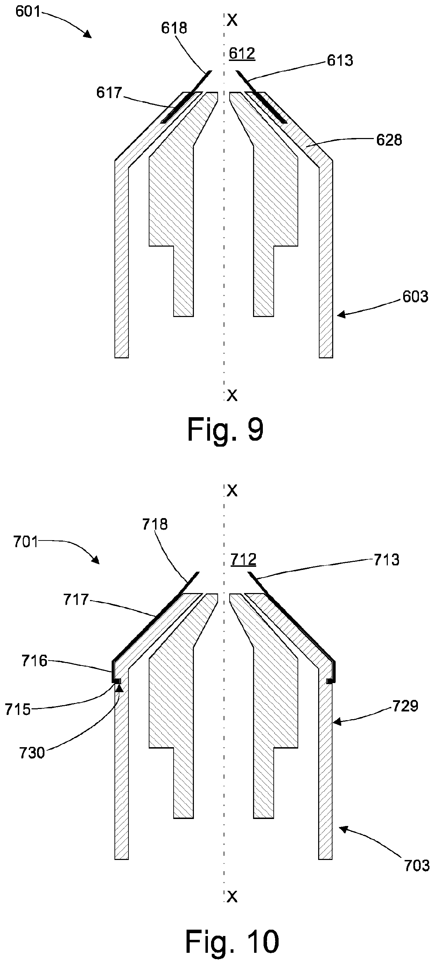

In Fig. 9 ist ein Schnitt durch eine sechste Ausführungsform einer Düse 601 dargestellt, wobei das Inlay 613 in der sechsten Ausführungsform der Düse 601 in einer Wandung 628 des Außenrohrs 603 angeordnet ist. Das Inlay 613 ist hierbei in einer Wandung 628 des Außenrohrs 603 angeordnet und dessen Teilabschnitt 618 ragt in den Austrittsbereich 612 der Düse 601 hinein. Das Inlay 613 weist gemäß der sechsten Ausführungsform zwei Teilabschnitte 617 und 618 auf, wobei der Teilabschnitt 617 der Befestigung des Inlays 613 in der Wandung 628 des Außenrohrs 603 dient. Vorteilhafterweise wird das Inlay 613 in der Wandung 628 des Außenrohrs 603 verklemmt oder dgl., sodass dieses dort fixiert ist.

Fig. 10 zeigt eine siebte Ausführungsform der Düse 701, wobei das Inlay 713 an einer Außenwandung 729 des Außenrohrs 703 angeordnet ist. Entsprechend der Fig. 10 ist das Inlay 713 in der siebten Ausführungsform der Düse 701 an einer Außenwandung 729 des Außenrohrs 703 angeordnet. Das Inlay 713 weist hierbei vier Teilabschnitte 715, 716, 717 und 718 auf, wobei der Teilabschnitt 718 zumindest teilweise in einen Austrittsbereich 712 ragt. Das Inlay 713 ist mittels des Teilabschnitts 715 in einer Nut 730 in der Außenwandung 729 des Außenrohrs 703 angeordnet und wird dort fixiert, bspw. verklemmt oder verpresst.

Alle nicht erfindungsgemäßen Ausführungsformen 101 bis 701 können ein optionales Anbauteil 101 bis 701 zur Strömungsführung im Ringspalt 108 bis 708 aufweisen. Des Weiteren besteht die Möglichkeit der Anordnung eines Inlays 113 bis 713 am Innenrohr 102 bis 702 und eines zusätzlichen Inlays 113 bis 713 am Außenrohr 103 bis 703, sodass die Düsen 101 bis 701 zwei Inlays 113 bis 713 aufweisen.

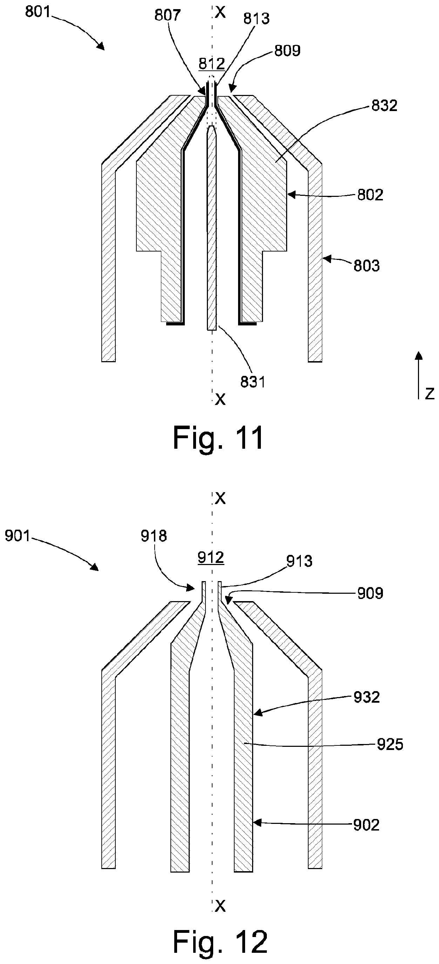

Fig. 11 stellt einen Schnitt durch eine nicht erfindungsgemä-ße Düse 801 entsprechend der ersten Ausführungsform dar, wobei die Düse 801 gemäß Fig. 11 eine in axialer Richtung der Achse X-X verschiebbare Düsennadel 831 zum Verschließen der Austrittsöffnung 807 des Innenrohrs 802 der Düse 801 aufweist. Durch das axiale Verschieben der Düsennadel 831 in Z-Richtung entlang der Achse X-X aus einer Ausgangsposition gemäß Fig. 11 in eine gestrichelt dargestellte Endposition wird die das Inlay 813 aufweisende Austrittsöffnung 807 des Innenrohrs 802 der Düse 801 verschlossen. Hierdurch wird der Austritt an zu versprühendem Stoff aus der Düse 801 verhindert.

Zudem besteht die Möglichkeit, dass sich neben der Düsennadel 831 auch das Innenrohr 802 in Z-Richtung verschiebt, sodass sowohl die Austrittsöffnung 807 des Innenrohrs 802 der Düse 801 als auch die Austrittsöffnung 809 des Außenrohrs 803 der Düse 801 verschlossen werden. Auch ein Aufweiten des Innenrohr 802 durch die Düsennadel 831 ist möglich. Hierdurch wird erreicht, dass bspw. im Falle der Befüllung eines Granulators, eines Coaters, insbesondere eines Trommelcoaters, oder eines Fluidisierungsapparates keine Pellets oder Partikel in die Austrittsöffnungen 807, 809 der Düse 801 eindringen können und diese somit schon vor dem Beginn des Herstellungsprozesses verstopft. Vorzugsweise ist hierbei das Innenrohr 802 und das Inlay 813 einteilig als Leitung, bevorzugt in Form eines elastischen Materials, vorzugsweise eines Silikons, ausgebildet. Des Weiteren wird hierdurch verhindert, dass sich durch Verschieben der Düsennadel 831 das Inlay 813 gegenüber dem Innenrohr 802 verschiebt.

In Fig. 12 wird ein Schnitt durch eine nicht erfindungsgemäße Düse 901 gezeigt, wobei das Inlay 913 und das Innenrohr 902 der Düse 901 einstückig als Leitung 932 ausbildet sind. Das Inlay 913 und das Innenrohr 902 können jedoch ebenso als zwei separate Bauteile ausgebildet sein. Gemäß dieser Ausführungsform bilden das Inlay 913 und das Innenrohr 902 die innere Leitung 929 aus. Diese ist bevorzugt aus einem elastischen Material, vorzugsweise aus einem Polymer, insbesondere einem Silikon, hergestellt. Vorteilhafterweise ist es hierdurch noch einfacher möglich die den zu versprühenden Stoff aufweisende innere Leitung 932 der Düse 901 auszutauschen. Zudem besteht die Möglichkeit die innere Leitung als Wegwerfartikel auszugestalten, was bspw. in der Pharmaindustrie bei einem Wechsel des zu versprühenden Stoffs, aufgrund eines Produktwechsels zu erheblichen Vorteilen und einer deutlichen Vereinfachung des Arbeitsprozesses im Vergleich zu einer Reinigung des Innenrohrs 902 führt.

Gemäß Fig. 12 sind insbesondere die aus der Austrittsöffnung 909 des Außenrohrs 903 in den Austrittsbereich 912 hineinragenden Teilabschnitte 918 mit einer sehr geringen Wandstärke ausgebildet. Die Wandung 925 des Innenrohrs 902 ist vorteilhafterweise aus Gründen der Stabilität des Innenrohrs 902 mit einer stärkeren Wandstärke ausgebildet als der Teilabschnitt 918. Ganz besonders bevorzugt werden die stark beanspruchten Wandabschnitte ebenfalls verstärkt ausgebildet, beispielsweise durch ein an dieser Stelle faserverstärktes Polymer oder dgl..

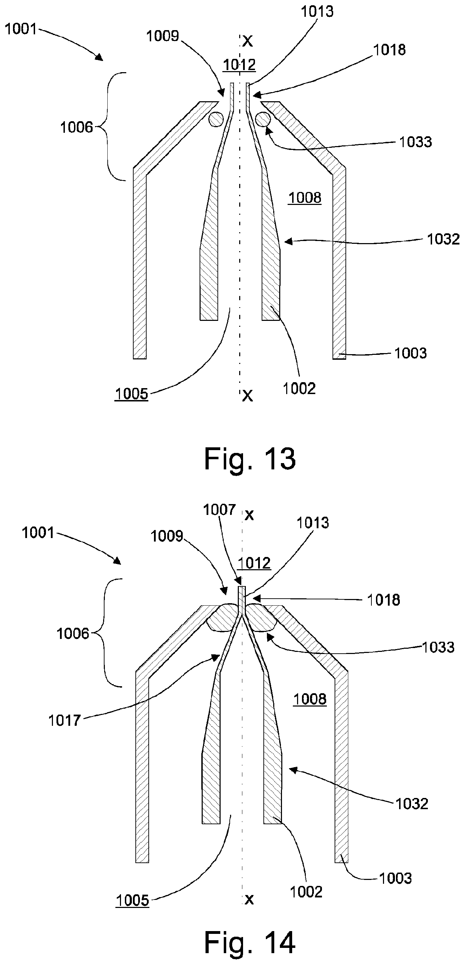

Die Fign. 13 und 14 zeigen eine weitere bevorzugte und erfindungsgemäße Ausführungsform einer Düse 1001 mit einer ihr Volumen veränderbaren Vorrichtung 1033.

Fig. 13 zeigt einen Schnitt durch eine bevorzugte Düse 1001, wobei das Inlay 1013 und das Innenrohr 1002 eine Leitung 1032, bevorzugt einstückig, der Düse 1001 ausbilden. Die Leitung 1032 ist zumindest teilweise aus einem elastischen Material, insbesondere einem Polymer und ganz bevorzugt aus einem Silikon, ausgebildet und im Ringspalt 1008 zwischen Innenrohr 1002 und Außenrohr 1003 ist im Bereich des Düsenmundstücks 1006 eine ihr Volumen veränderbare Vorrichtung 1033 angeordnet, insbesondere ein aufblasbarer Pressluftring oder dgl..

Die ihr Volumen veränderbare Vorrichtung 1033, insbesondere der Pressluftring, weist zumindest einen hier nicht dargestellten Einlass für eine Fluidzufuhr und zumindest einen hier nicht dargestellten Auslass für eine Fluidabfuhr auf. Hierdurch ist das Volumen der Vorrichtung 1033 durch Fluidzufuhr oder Fluidabfuhr veränderbar, nämlich vergrößerbar bzw. verkleinerbar, wodurch die Vorrichtung 1033 von einer beispielhaft in Fig. 13 gezeigten Offen-Stellung in eine in Fig. 14 gezeigte Schließ-Stellung verbringbar ist oder verbracht wird und umgekehrt. Die Schließ-Stellung ist stets gegeben, sobald das Innenrohr 1002 durch die Vorrichtung 1033 geschlossen ist, unabhängig vom Öffnungsgrad des von dem Gas, insbesondere der Zerstäuberluft, durchströmten Ringspalts 1008. In der in Fig. 13 gezeigten Offen-Stellung ist zum einen der Ringspalt 1008 für das Gas und zum anderen der Fluidkanal 1005 für den zu versprühenden Stoff, insbesondere eine Flüssigkeit oder Dispersion, durchströmbar, wodurch das Gas den zu versprühenden Stoff am Austritt zerstäuben kann. Vorteilhafterweise hat die Vorrichtung 1033 auf die Strömung des durch den Ringspalt 1008 strömenden Gases keinen bzw. einen vernachlässigbaren Einfluss.

Es gilt stets zu beachten, dass der zu versprühende Stoff, insbesondere die Flüssigkeit, nicht unzerstäubt aus der Düse 1001 austreten soll. Hierzu ist zu gewährleisten, dass zu Beginn eines jeden Sprühvorgangs zuerst das Gas, insbesondere das Zerstäubergas, durch den Ringspalt 1008 und somit aus der Düse 1001 strömt und anschließend der zu versprühende Stoff, insbesondere die Flüssigkeit. Beim Beenden des Sprühvorgangs ist zuerst die Zufuhr des zu versprühenden Stoffs zu stoppen bzw. zu unterbrechen und anschließend die des Gases. Hierdurch wird zu jederzeit sichergestellt, dass bei einem Sprühvorgang der zu versprühende Stoff zerstäubt wird und am Ende eines jeden Sprühvorgangs kein zu versprühender Stoff unzerstäubt aus der Düse tropft, ggf. auf zu behandelndes (beschichtendes) Material. Beim Starten bzw. Beenden eines Sprühvorgang kann dies bspw. durch ein automatisches "Vorlaufen" bzw. "Nachlaufen" des Gases gewährleistet werden.

Alle Stellungen, in denen der Ringspalt 1008 und/oder der Fluidkanal 1005 von Fluid durchströmbar ist, wird als Offen-Stellung bezeichnet. Hierdurch ist es möglich eine stufenlose Einstellung des Volumenstroms mit einem Durchfluss von 0 % und 100 % für das Gas und/oder für den zu versprühenden Stoff bereitzustellen, wobei die Einstellung der Volumenströme bei nur einer Vorrichtung 1033 abhängig voneinander ist. Bei der Verwendung mehrerer, insbesondere zweier Vorrichtungen 1033,nämlich jeweils für den im Fluidkanal 1005 geförderten zu versprühenden Stoff und das im Ringspalt 1008 geförderte Gas, sind die Volumenströme des zu versprühenden Stoffs im Fluidkanal 1005 des Innenrohr 1002 und des Gases im Ringspalt 1008 unabhängig voneinander einstellbar oder können unabhängig voneinander eingestellt werden, nämlich durch unabhängig voneinander veränderbare Volumina der verwendeten Vorrichtungen 1033 durch Fluidzufuhr oder Fluidabfuhr. Durch die unabhängige Einstellbarkeit der Volumina unterschiedlicher Vorrichtungen 1033 ist ebenfalls eine optimale Anpassung des Volumenstroms des zu versprühenden Stoffs auf das Zerstäubergas und umgekehrt möglich. Hierdurch kann auch auf die kleinsten Veränderungen in der Symmetrie oder Tröpfchengröße im Spray reagiert werden. Die Vorrichtungen 1033 für den zu versprühenden Stoff und das Gas werden durch hier nicht gezeigte Steuer- und/oder Regeleinrichtungen unabhängig voneinander geregelt und/oder gesteuert.

Die Vorrichtung 1033 ist vorzugsweise konzentrisch um die Leitung 1032 angeordnet und vom Außenrohr 1003 umschlossen, wobei ein Teilabschnitt 1018 aus der Austrittsöffnung 1009 des Außenrohrs 1003 zumindest teilweise heraus in den Austrittsbereich 1012 ragt. In Fig. 13 ist die Vorrichtung 1033 ringförmig um das Innenrohr 1002 herum ausgebildet. Die Vorrichtung 1033 ist bevorzugt als Pressluftring ausgebildet.

Die Vorrichtung 1033 kann jedoch auch in jeder erdenklichen anderen Ausführungsform ausgestaltet sein.

Die Vorrichtung 1033 ist vorzugsweise mit einer hier nicht gezeigten Regel- oder Steuereinrichtung verbunden, die die Fluidzufuhr oder Fluidabfuhr der Vorrichtung 1033 regelt oder steuert, sodass das Volumen der Vorrichtung 1033 einstellbar ist oder eingestellt wird. Ganz besonders bevorzugt ist oder wird das Volumen der Vorrichtung 1033 durch Fluidzufuhr oder Fluidabfuhr stufenlos veränderbar oder verändert oder die Volumina der Vorrichtungen 1033 sind oder werden durch Fluidzufuhr oder Fluidabfuhr stufenlos veränderbar oder verändert. Durch die stufenlose Einstellbarkeit des Volumens der Vorrichtung 1033 bzw. der Vorrichtungen 1033 ist es möglich die Volumenströme des zu versprühenden Stoffs und des den zu versprühenden Stoff zerstäubenden Gases genau und gezielt aufeinander einzustellen, sodass die Symmetrie und die Tröpfchengröße des Sprays optimal für den Prozess, insbesondere einen Coatingprozess von Partikeln, vorzugsweise Tabletten, einstellbar ist oder eingestellt wird. In Fig. 13 ist das Volumen der Vorrichtung 1033 minimal, sodass sich die Düse 1001 in der maximalen Offen-Stellung befindet. Die maximale Offen-Stellung ist dementsprechend dadurch gekennzeichnet, dass die Vorrichtung 1033 ein minimales Volumen aufweist.

Ein Schnitt durch die in Fig. 13 gezeigte bevorzugte Düse 1001, wobei das Inlay 1013 und das Innenrohr 1002 eine Leitung 1032 der bevorzugten Düse 1001 ausbilden und die bevorzugte Düse 1001 im Bereich des Düsenmundstücks 1006 zwischen Innenrohr 1002 und Außenrohr 1003 eine ihr Volumen veränderbare Vorrichtung 1033 aufweist, wobei die Vorrichtung in Fig. 14 eine Schließ-Stellung der bevorzugten Düse darstellt, indem die Vorrichtung 1033 den Fluidkanal 1005 und den Ringspalt 1008 verschließt. Das Inlay 1013 wird durch den durch die Austrittsöffnung 1007 des Innenrohrs 1002 austretenden zu versprühenden Stoff und/oder das durch die Austrittsöffnung 1009 des Außenrohrs 1003 austretende Gas in Schwingung versetzt, insbesondere in eine hochfrequente Schwingung, um Ablagerungen im Austrittsbereich 1007, 1009 des zu versprühenden Stoffs und/oder des Gases zu minimieren oder ganz zu verhindern. Bevorzugt ist ein Teilabschnitt 1018 des Inlays 1013, insbesondere während des Sprühvorgangs, auch längenveränderbar. Aufgrund der zusätzlichen Längenveränderbarkeit des Teilabschnitts 1018 des Inlays 1013, der zumindest teilweise aus dem Innenrohr 1002 oder dem Außenrohr 1003 der Düse 1001 herausragt ist es möglich die Beweglichkeit des Teilabschnitts 1018, insbesondere die Frequenz der Vibration des Teilabschnitts 1018 des Inlays 1013, zu verändern. Durch die vorgenannten Maßnahmen wird die Symmetrie und die Tröpfchengröße des Sprays während des Herstellungs- und/oder Sprühprozesses nicht durch Ablagerungen des zu versprühenden Stoffes beeinflusst, sodass es nicht zu einer unerwünschten Sprühtrocknung und/oder zu lokaler Überfeuchtung und Agglomeration kommt.

In Fig. 14 ist die bevorzugte Düse 1001 mit einem im Vergleich zur Offen-Stellung gemäß Fig. 13 vergrößerten Volumen der Vorrichtung 1033 dargestellt. Der bevorzugt als Vorrichtung 1033 verwendete Pressluftring ist hierzu mit einem Fluid, insbesondere einem Gas, vorzugsweise Pressluft oder dgl., aufgeblasen. Die Vorrichtung 1033 ist bspw. über eine nicht dargestellte Leitung mit einem ebenfalls nicht dargestellten Vorratsbehälter verbunden, über die die Vorrichtung 1033 bspw. mittels einer nicht dargestellten Steuer- und/oder Regeleinrichtung befüll- oder entleerbar ist, sodass die Vorrichtung 1033 ihr Volumen von einem ersten Volumen in der Offen-Stellung gemäß Fig. 13 auf ein zweites Volumen gemäß Fig. 14 in der Schließ-Stellung verändert und umgekehrt.

Im vorliegenden Ausführungsbeispiel wird durch das vergrößerte Volumen der Vorrichtung 1033 sowohl die Leitung 1032, insbesondere die im Düsenmundstück 1006 angeordneten Teilabschnitte 1017 und 1018, als auch der Ringspalt 1008 abgedichtet. Durch das vergrößerte Volumen wird die Leitung 1032, hier die Teilabschnitte 1018 zusammengepresst und zusätzlich die Austrittsöffnung 1009 verschlossen, sodass weder durch den Fluidkanal 1005 noch durch den Ringspalt 1008 ein Fluid strömen kann. Hierdurch wird erreicht, dass bspw. im Falle der Befüllung eines Granulators, eines Coaters, insbesondere eines Trommelcoaters, oder eines Fluidisierungsapparates keine Pellets oder Partikel in die Austrittsöffnungen 1007, 1009 der Düse 1001 eindringen können und diese somit schon vor dem Beginn des Herstellungsprozesses verstopfen.

Weitere Fortbildungen der eine ihr Volumen veränderbare Vorrichtung 1033 aufweisenden bevorzugten Düse 1001 sind denkbar. Bspw. besteht die Möglichkeit, dass die Düse 1001 mehrere Vorrichtungen 1033, insbesondere zwei Vorrichtungen 1033 umfasst. Bevorzugt sind diese durch Einrichtungen wie Bleche oder ähnliches voneinander getrennt, sodass diese unabhängig voneinander betrieben werden können. Vorteilhafterweise weist die Düse 1001 eine erste Vorrichtung 1033 für das Verschlie-ßen des Ringspalts 1008 und eine zweite Vorrichtung 1033 für das Verschließen des Fluidkanals 1005 auf. Hierbei sind die beiden Vorrichtungen 1033 vorzugsweise durch ein als Trennwand fungierendes Blech oder dgl. zu trennen, sodass die Volumenänderung einer ersten Vorrichtung 1033 den Fluidkanal 1005 verschließt bzw. öffnet und die Volumenänderung einer zweiten Vorrichtung 1033 den Ringspalt 1008 verschließt bzw. öffnet, ohne dass eine Volumenänderung der einen Vorrichtung 1033 die andere Vorrichtung 1033 beeinflusst. Hierdurch ist es möglich eine stufenlose Einstellung des Volumenstroms mit einem Durchfluss von 0 % und 100 % sowohl für das Zerstäubergas als auch für den zu versprühenden Stoff bereitzustellen, wobei die Einstellung der Volumenströme unabhängig oder abhängig voneinander erfolgen kann.

Bei der Verwendung von mindestens zwei Vorrichtungen 1033 gilt es zu beachten, dass der zu versprühende Stoff, insbesondere die Flüssigkeit, nicht unzerstäubt aus der Düse 1001 austreten darf, da es ansonsten zu Produktions-Ausschuss kommen kann, bspw. durch agglomerierte Tabletten. Hierzu ist zu gewährleisten, dass zu Beginn eines jeden Sprühvorgangs zuerst das Gas, insbesondere das Zerstäubergas, durch den Ringspalt 1008 und somit aus der Düse 1001 strömt und anschließend der zu versprühende Stoff, insbesondere die Flüssigkeit. Beim Beenden des Sprühvorgangs ist zuerst die Zufuhr des zu versprühenden Stoffs zu stoppen und anschließend die des Gases. Eine Regelungs- oder Steuerungseinrichtung kann dieser Tatsache Folge leisten. Hierdurch wird zu jederzeit sichergestellt, dass bei einem Sprühvorgang der zu versprühende Stoff stets zerstäubt wird und am Ende eines jeden Sprühvorgangs kein zu versprühender Stoff unzerstäubt aus der Düse tropft, ggf. auf zu behandelndes (beschichtendes) Material.

Es ist stets sicherzustellen, dass beim Verbringen der Vorrichtung 1033 von der einen Schließ-Stellung des Innenrohrs 1002 in die zumindest eine Offen-Stellung des Innenrohrs 1002 das durch den Ringspalt 1008 strömende Gas zumindest zeitgleich mit dem Verbringen der Vorrichtung 1033 von der einen Schließ-Stellung des Innenrohrs 1002 in die zumindest eine Offen-Stellung des Innenrohrs 1002 durch den Ringspalt 1008 zu strömen beginnt. Des Weiteren ist von Vorteil, dass beim Verbringen der Vorrichtung 1033 von der zumindest eine Offen-Stellung des Innenrohrs 1002 in die eine Schließ-Stellung des Innenrohrs 1002 das durch den Ringspalt 1008 strömende Gas frühestens zeitgleich mit dem Verbringen der Vorrichtung 1033 von der zumindest eine Offen-Stellung des Innenrohrs 1002 in die eine Schließ-Stellung des Innenrohrs 1002 durch den Ringspalt 1008 zu strömen stoppt.

Vorteilhafterweise wird durch dieses Verfahren sichergestellt, dass es beim Anfahren oder Beenden des Sprühvorgangs am Düsenmund, das heißt den Austrittsöffnungen 1007, 1009 von Innenrohr 1002 und Außenrohr 1003, nicht zu einem Austritt von zu versprühendem Stoff kommt, ohne dass dieser direkt durch das durch den Ringspalt 1008 strömende Gas zerstäubt wird. Eine Zerstäubung des zu versprühenden Stoffs wird somit durch das Verfahren stets gewährleistet. Hierdurch kommt es zum einen nicht zu Ablagerungen am Düsenmund bspw. beim Trocknen des zu früh ausgetretenen zu versprühenden Stoffs und zum anderen nicht zu einer Agglomeration von zu besprühenden Partikeln aufgrund von nicht zerstäubten zu versprühenden Stoff.

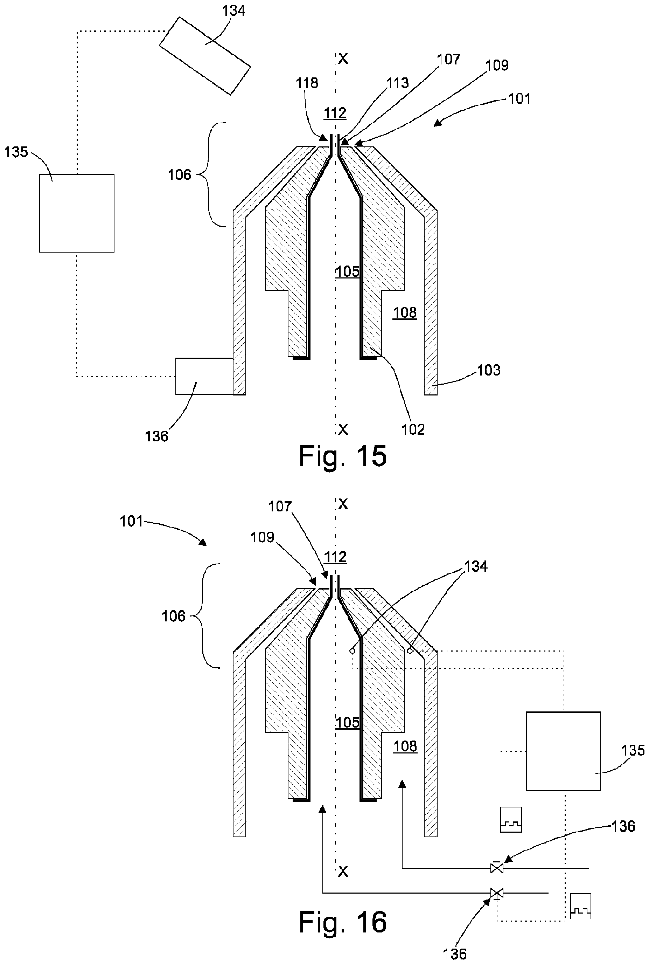

Fig. 15 stellt einen schematischen Aufbau eines ersten nicht erfindungsgemäßen Verfahrens zur Überwachung des Düsenmundstücks 106 einer ersten Ausführungsform der Düse 101 dar. Die Düse 101 entspricht der Beschreibung der Fign. 2 bis 4. Auch alle anderen Ausführungsformen der Düse 201, 301, 401, 501, 601, 701, 801, 901 und 1001 sowie weitere Düsen können mit diesem Verfahren überwacht werden. Die Düse 101 weist ein Innenrohr 102 und ein Außenrohr 103 sowie ein am Innenrohr 102 angeordnetes Inlay 113 auf, wobei der Teilabschnitt 118 zumindest teilweise aus der Austrittsöffnung 107 der Düse 101 heraus in einen Austrittsbereich 112 ragt.

Die Überwachung des Düsenmundstücks auf Ablagerungen durch den Sensor 134 erfolgt im Ausführungsbeispiel der Fig. 15 durch einen außerhalb der Düse angeordneten Sensor 134.

Des Weiteren weist der Aufbau für das erste Verfahren einen Sensor 134, insbesondere einen optischen Sensor, ganz besonders bevorzugt einen bildgebenden Sensor, bspw. eine Kamera, oder einen Ultraschallsensor, oder einen eine physikalische Messgröße erfassenden Sensor, bspw. einen Drucksensor, ganz besonders bevorzugt einen Differenzdrucksensor, auf. Der Sensor 134 erfasst die Düse 101, insbesondere das Düsenmundstück 106, ganz besonders die Austrittsöffnungen 107, 109 des Innenrohrs 102 und/oder des Außenrohrs 103 im Austrittsbereich 112 der Düse 101. Der Sensor 134 wird mit einer bestimmten einstellbaren Rate abgetastet. Der Sensor 134 ist mit einer Kontrolleinheit 135, insbesondere einem Daten verarbeitenden Computer, bspw. einen Industrie-PC oder einem Embeded-PC oder dgl., verbunden. Die vom Sensor 134 erfassten Daten werden an die Kontrolleinheit 135 übermittelt. Die Kontrolleinheit 135 wertet die Daten des Sensors 134 aus. Die Kontrolleinheit 135 ermittelt, bspw. durch einen Algorithmus oder dgl., somit, ob sich an der Düse 101, insbesondere dem Düsenmundstück 106, ganz besonders den Austrittsöffnungen 107, 109 im Austrittsbereich 112 der Düse 101 Ablagerungen ausbilden oder ausgebildet haben. Solche Ablagerungen beeinträchtigen die Qualität des Sprays, insbesondere die Symmetrie und/oder die Tröpfchengröße, während des Herstellungsund/oder Sprühprozesses stark.

Sobald bspw. durch die Ablagerungen ein bestimmter hinterlegter Grenzwert überschritten wird, wodurch die Symmetrie und die Tröpfchengröße des Sprays während des Herstellungsund/oder Sprühprozesses beeinträchtigt wird, übermittelt die Kontrolleinheit 135 ein Signal an eine Vorrichtung 136. Im Ausführungsbeispiel der Fig. 15 ist die Vorrichtung 136 als Vibrationseinrichtung ausgebildet und mit der Düse 101 verbunden. Die Vorrichtung 136 versetzt die Düse 101 derart in Vibration, dass sich die Ablagerungen an der Düse 101 ablösen. Sobald die Ablagerungen an der Düse 101, insbesondere dem Düsenmundstück 106, ganz besonders den Austrittsöffnungen 107, 109 im Austrittsbereich 112 der Düse 101 nicht mehr vorhanden sind wird das entsprechende Signal vom Sensor 133 erfasst und an die Kontrolleinheit 135 übermittelt, die anschließend ein Signal an die Vorrichtung 136 übermittelt, dass die Vorrichtung 136 abgeschalten wird. Dieser Vorgang wiederholt sich über den gesamten Herstellungs- und/oder Sprühprozess so oft wie notwendig.

Die mit dem Sensor 134 durchgeführte kontinuierliche Überwachung der Düse 101 erfolgt vorzugsweise als Inline-, Atlineoder Online-Messung. Bspw. erfasst ein Ultraschallsensor die aktuelle Form und die aktuellen Abmessungen der Düse 101 (Istwert). Diese Daten werden anschließend in der Kontrolleinheit 135 zur Beurteilung der Sprayqualität verwendet und mit den ursprünglichen Daten (Sollwert) der Düse 101 abgeglichen. Bevorzugt wird bei einer zu großen Differenz zwischen Ist- und Sollwert ein Signal von der Kontrolleinheit 135 an die Vorrichtung 136 übermittelt und die notwendigen Maßnahmen (Vibration) gestartet. Hierbei ist die als Vibrationseinheit ausgebildete Vorrichtung 136 mit der Düse 101 verbunden, die beim Empfang eines Signals von der Kontrolleinheit 135 die Düse 101 in Vibration versetzt, sodass sich die Ablagerungen am Düsenmundstück 106 lösen. Die Einbindung der vorgenannten Schritte in den Herstellungs- und/oder Sprühprozess ermöglicht die automatische Überwachung der Sprayqualität über die gesamte Dauer des Herstellungs- und/oder Sprühprozesses.

Die Überwachung des Düsenmundstücks 106 auf Ablagerungen durch den Sensor 134 erfolgt im Ausführungsbeispiel der Fig. 16 durch einen innerhalb der Düse 101 angeordneten Sensor 134. Eine derartige Anordnung ist manchmal sinnvoll, insbesondere bei baulich beengten Verhältnissen, bspw. bei ein kleines Volumen aufweisenden Trommelcoatern oder dgl..

Einen zweiten schematischen Aufbau eines nicht erfindungsgemäßen Verfahrens zur Überwachung der Düse 101, insbesondere des Düsenmundstücks 106, ganz besonders der Austrittsöffnungen 107, 109 im Austrittsbereich 112 einer ersten Ausführungsform der Düse 101 ist in Fig. 16 gezeigt. Die Druckverhältnisse der originalen Düsenform im Austrittsbereich 112, d.h. ohne Ablagerungen oder Anbackungen, entsprechen dem Sollwert bei der Druckmessung. Hierbei ist je ein Drucksensor 134 im Fluidkanal 105 und im Ringspalt 108 angeordnet. Das Verfahren umfasst bevorzugt mehrere Sensoren 134, insbesondere Sensoren 134, die unabhängig voneinander arbeiten. Durch die mehreren Sensoren 134 ist es möglich die die Symmetrie und Tröpfchengröße negativ beeinflussenden Ablagerungen noch besser am Düsenmundstück 106 der Düse 134 zu erfassen, sodass die am besten geeignete Maßnahme zum Ablösen der Ablagerungen, bspw. Vibration oder Puls, einleitbar ist.

Der beiden Sensoren 134 werden mit einer bestimmten einstellbaren Rate bzw. in einem bestimmten Takt abgetastet. Kommt es zu Ablagerungen bzw. Agglomerationen an der Düse 101, insbesondere dem Düsenmundstück 106, ganz besonders den Austrittsöffnungen 107, 109 im Austrittsbereich 112 erhöht sich der Druck im Fluidkanal 105 und/oder im Ringspalt 108 (Istwert). Diese Druckerhöhung wird vom Sensor 134 erfasst und an eine Kontrolleinheit 135 übermittelt. Mittels der erfassten physikalischen Messgröße, hier bspw. dem absoluten Druck, kann bspw. der Massen- und somit auch der Volumenstrom des zu versprühenden Stoffs und/oder des Zerstäubergases berechnet werden. Der messtechnisch erfasste Druck an den Sensoren 134 lässt Rückschlüsse auf die Ablagerungen am Düsenmundstück 106 zu. Ablagerungen b am Düsenmundstück 106 führen zu einem Druckanstieg vor den Austrittsöffnungen 107, 109 im Fluidkanal 105 oder Ringspalt 108 und somit zu einer größeren Strömungsgeschwindigkeit des zu versprühenden Stoffs und/oder des Gases, sodass bei entsprechender Vorgabe von Schwellenwerten (Sollwert) oder Toleranzbereichen (bspw. + 10 % Abweichung) und deren Über bzw. Unterschreitung die Kontrolleinheit 135 durch Übermittlung eines Signals an die Vorrichtung 136 geeignete Gegenmaßnahmen zum Entfernen der Ablagerungen veranlassbar sind.

Bei der Überwachung findet durch die Kontrolleinheit 135 ein ständiger Abgleich zwischen Ist- und Sollwert statt.

Sobald ein Über- oder Unterschreiten eines bestimmten Grenzwerts (Sollwert) durch die Kontrolleinheit 135 registriert wird übermittelt die Kontrolleinheit 135 ein entsprechendes Signal an eine Vorrichtung 136. Im Ausführungsbeispiel der Fig. 16 ist die Vorrichtung 136 als Pulsationseinrichtung ausgebildet. Diese wird bspw. durch Regelventile an den entsprechenden Zuführungsleitungen der Fluide realisiert. Die Vorrichtung 136 erzeugt eine pulsierende Strömung des zu versprühenden Stoffs und/oder des Gases, insbesondere des Zerstäubergases, dargestellt durch die beiden Diagramme in Fig. 16. Vorzugsweise wird der Gasstrom nur kurzzeitig pulsiert. Unter- bzw. überschreitet der Druck anschließend den Grenzwert erneut wird der Herstellungs- und Sprühprozess fortgesetzt. Ist der Grenzwert weiter über- bzw. unterschritten wird ein erneuter Puls erzeugt. Der aufgeprägte Puls kann unterschiedliche Frequenzen aufweisen, insbesondere zwischen 1 Hz und 1500 Hz, bevorzugt zwischen 25 Hz und 250 Hz. Hierdurch werden die Ablagerungen am Düsenmundstück 106 im Bereich der Austrittsöffnungen 107, 109 des Innen- und Außenrohrs 102, 103 verbessert gelöst und entfernt. Dieser Vorgang wiederholt sich bis die Ablagerungen bzw. Agglomerationen an der Düse 101 entfernt sind, sodass die benötigte Sprayqualität stets sichergestellt ist.

Ein drittes nicht erfindungsgemäßes Verfahren bildet die Überwachung der Tröpfchengröße des Sprays während des Herstellungs- und/oder Sprühprozesses bspw. mittels eines Lasermessverfahrens. Bei Abweichungen von Ist- zu Sollwert der Tröpfchengröße, d.h. bei nicht optimaler Tröpfchengröße, entsprechen die zu ergreifenden Maßnahmen im Allgemeinen den Maßnahmen des ersten und zweiten Verfahrens gemäß Fig. 15 oder Fig. 16.

## Patentansprüche

1. Düse (1001) zum Versprühen von Stoffen, insbesondere Dispersionen, Emulsionen oder Suspensionen, umfassend
- einen ein Düsenmundstück (1006) aufweisenden Düsenkörper,
- wobei der Düsenkörper ein mit einer Zuführung für den zu versprühenden Stoff verbundenes eine Innenwandung und eine Austrittsöffnung (1007) aufweisendes Innenrohr (1002) und ein zum Innenrohr (1002) beabstandetes und mit einer Zuführung für ein Gas verbundenes eine Austrittsöffnung (1009) aufweisendes Außenrohr (1003) aufweist, und
- die Austrittsöffnung (1007) des Innenrohrs (1002) und die Austrittsöffnung (1009) des Außenrohrs (1003) im Bereich des Düsenmundstückes (1006) angeordnet sind,
**dadurch gekennzeichnet, dass** das Innenrohr (1002) zumindest teilweise aus einem elastischen Material ausgebildet ist und im Ringspalt (1008) zwischen Innenrohr (1002) und Außenrohr (1003) eine Vorrichtung (1033) angeordnet ist, die einen Einlass für eine Fluidzufuhr und einen Auslass für eine Fluidabfuhr aufweist, wobei die Vorrichtung (1033) eine Schließ-Stellung zum Verschließen des Innenrohrs (1002) und zumindest eine Offen-Stellung aufweist, wobei in der zumindest einen Offen-Stellung zumindest der Fluidkanal (1005) für den zu versprühenden Stoff durchströmbar ist, und wobei die Vorrichtung (1033) derart ausgestaltet ist, dass das Volumen der Vorrichtung (1033) durch Fluidzufuhr oder Fluidabfuhr veränderbar ist, wodurch die Vorrichtung (1033) von der einen Schließ-Stellung des Innenrohrs (1002) in die zumindest eine Offen-Stellung des Innenrohrs (1002) verbringbar ist oder verbracht wird und umgekehrt.

2. Düse (1001) nach Anspruch 1, **dadurch gekennzeichnet, dass** die Vorrichtung (1033) im Bereich des Düsenmundstücks (1006) angeordnet ist.

3. Düse (1001) nach Anspruch 1 oder 2, **dadurch gekennzeichnet, dass** die Vorrichtung (1033) mit einer Regeleinrichtung verbunden ist, die die Fluidzufuhr oder Fluidabfuhr der Vorrichtung (1033) regelt, sodass das Volumen der Vorrichtung (1033) einstellbar ist oder eingestellt wird, wobei zweckmäßigerweise das Volumen der Vorrichtung (1033) stufenlos einstellbar ist oder eingestellt wird.

4. Düse (1001) nach einem der vorhergehenden Ansprüche, **dadurch gekennzeichnet, dass** die Vorrichtung (1033) eine maximale Offen-Stellung aufweist, wobei zweckmäßigerweise in der maximalen Offen-Stellung das Volumen der Vorrichtung (1033) minimal ist.

5. Düse (1001) nach einem der vorhergehenden Ansprüche, **dadurch gekennzeichnet, dass** die Vorrichtung (1033) ringförmig um das Innenrohr (1002) herum ausgebildet ist, wobei zweckmäßigerweise die ringförmig ausgebildete Vorrichtung (1033) als Pressluftring ausgebildet ist.

6. Düse (1001) nach einem der vorhergehenden Ansprüche, **dadurch gekennzeichnet, dass** die Düse (1001) mehrere Vorrichtungen (1033), insbesondere zwei Vorrichtungen (1033) umfasst, wobei zweckmäßigerweise die Düse (1001) eine Vorrichtung (1033) für das Verschließen des Ringspalts (1008) und eine Vorrichtung (1033) für das Verschließen des Fluidkanals (1005) aufweist.

7. Düse (1001) nach einem der vorhergehenden Ansprüche, **dadurch gekennzeichnet, dass** am Innenrohr (1002) oder am Außenrohr (1003) ein Inlay (1013) angeordnet ist, wobei das Inlay (1013) so angeordnet ist, dass es durch den aus der Austrittsöffnung (1007) des Innenrohrs (1002) austretenden zu versprühenden Stoff und/oder das aus der Austrittsöffnung (1009) des Außenrohrs (1003) ausströmende Gas in Schwingung versetzbar ist oder versetzt wird, um Ablagerungen im Austrittsbereich des zu versprühenden Stoffs und/oder des Gases zu minimieren oder zu verhindern.

8. Düse (1001) nach Anspruch 7, **dadurch gekennzeichnet, dass** das Inlay (1013) an der Innenwandung oder an einer Außenwandung oder in einer Wandung des Innenrohrs (1002) angeordnet ist oder an der Innenwandung (526) oder an einer Außenwandung oder in einer Wandung des Außenrohrs (1003) angeordnet ist und zumindest teilweise in einen Austrittsbereich des zu versprühenden Stoffs und/oder des Gases hineinragt.

9. Düse (1001) nach einem der Ansprüche 7 oder 8, **dadurch gekennzeichnet, dass** das Inlay (1013) austauschbar anordenbar oder angeordnet ist.

10. Düse (1001) nach einem der Ansprüche 7 bis 9, **dadurch gekennzeichnet, dass** ein Teilabschnitt (1017, 1018) des Inlays (1013) längenveränderbar ist.

11. Düse (1001) nach einem der Ansprüche 7 bis 10, **dadurch gekennzeichnet, dass** das Inlay (1013) und das Innenrohr (1002) als einstückige Leitung (1032) ausgebildet sind.

12. Düse (1001) nach einem der vorhergehenden Ansprüche, **dadurch kennzeichnet, dass** das Außenrohr (1003) und das Innenrohr (1002) koaxial um eine Achse X-X angeordnet sind.

13. Düse (1001) nach einem der vorhergehenden Ansprüche, **dadurch gekennzeichnet, dass** das Außenrohr (1003) und das Innenrohr (1002) dergestalt zueinander angeordnet sind, dass die Austrittsöffnung (1009) des Außenrohrs (1003) konzentrisch zur Austrittsöffnung (1007) des Innenrohrs (1002) angeordnet ist.

14. Düse (1001) nach einem der vorhergehenden Ansprüche, **dadurch gekennzeichnet, dass** im Bereich des Düsenmundstückes (1006) zwischen dem Außenrohr (1003) und dem Innenrohr (1002) ein Anbauteil in Form von Drallkörpern, Drallblechen oder der gleichen zur Gasführung angeordnet ist.

15. Düse (1001) nach einem der Ansprüche 7 bis 11, **dadurch gekennzeichnet, dass** das Inlay (1013) eine variierbare Wandstärke aufweist und/oder die Schwingung des Inlays (1013) eine hochfrequente Schwingung ist.

## Claims

1. A nozzle (1001) for spraying substances, in particular dispersions, emulsions or suspensions, comprising
- a nozzle body which has a nozzle mouthpiece (1006),
- wherein the nozzle body comprises an inner pipe (1002), said inner pipe being connected to a feed for the substance to be sprayed and comprising an inner wall and an exit opening (1007), and an outer pipe (1003), said outer pipe being distanced to the inner pipe (1002), being connected to a feed for a gas and comprising an exit opening (1009), and
- the exit opening (1007) of the inner pipe (1002) and the exit opening (1009) of the outer pipe (1003) are arranged in the region of the nozzle mouthpiece (1006),
**characterised in that** the inner pipe (1002) is designed at least partly of an elastic material and a device (1033) which comprises an inlet for the fluid feed and an outlet for the fluid discharge is arranged in the annular gap (1008) between the inner pipe (1002) and the outer pipe (1003), wherein the device (1033) has a closure position for closing the inner pipe (1002) and at least one open position, wherein in the at least one open position the substance to be sprayed can flow through at least the fluid channel (1005), and wherein the device (1033) is designed in a manner such that the volume of the device (1033) can be changed by the fluid feed or the fluid discharge, by which means the device (1033) can be brought or is brought from the one closure position of the inner pipe (1002) into the at least one open position of the inner pipe (1002) and vice versa.

2. A nozzle (1001) according to claim 1, **characterised in that** the device (1033) is arranged in the region of the nozzle mouthpiece (1006).

3. A nozzle (1001) according to claim 1 or 2, **characterised in that** the device (1033) is connected to a closed-loop control device which closed-loop controls the fluid feed or fluid discharge of the device (1033), so that the volume of the device (1033) can be adjusted or is adjusted, wherein expediently the volume of the device (1033) can be adjusted or is adjusted in an infinite manner.

4. A nozzle (1001) according to one of the preceding claims, **characterised in that** the device (1033) has a maximal open position, wherein expediently the volume of the device (1033) is minimal in the maximal open position.

5. A nozzle (1001) according to one of the preceding claims, **characterised in that** the device (1033) is designed annularly around the inner pipe (1002), wherein expediently the annularly designed device (1033) is designed as a pressurised air ring.

6. A nozzle (1001) according to one of the preceding claims, **characterised in that** the nozzle (1001) comprises several devices (1033), in particular two devices (1033), wherein expediently the nozzle (1001) comprises a device for the closure of the annular gap (1008) and a device for the closure of the fluid channel (1005).

7. A nozzle (1001) according to one of the preceding claims, **characterised in that** an inlay (1013) is arranged on the inner pipe (1002) or on the outer pipe (1003), wherein the inlay (1013) is arranged such that it can be brought or is brought into oscillation by way of the substance to be sprayed which exits out of the exit opening (1007) of the inner pipe (1002) and/or the gas which flows out of the exit opening (1009) of the outer pipe (1003), in order to minimise or to prevent deposits in the exit region of the substance to be sprayed or of the gas.

8. A nozzle (1001) according to claim 7, **characterised in that** the inlay (1013) is arranged on the inner wall or on an outer wall or in a wall of the inner pipe (1002) or on the inner wall or on an outer wall or in a wall of the outer pipe (1003) and projects at least partly into an exit region of the substance to be sprayed and/or of the gas.

9. A nozzle (1001) according to one of the claims 7 or 8, **characterised in that** the inlay (1013) can be arranged or is arranged in an exchangeable manner.

10. A nozzle (1001) according to one of the claims 7 to 9, **characterised in that** a part-section (1018) of the inlay (1013) is changeable in length.

11. A nozzle (1001) according to one of the claims 7 to 10, **characterised in that** the inlay (1013) and the inner pipe (1002) are designed as a single-piece conduit (1032).

12. A nozzle (1001) according to one of the preceding claims, **characterised in that** the outer pipe (1003) and the inner pipe (1002) are arranged coaxially about an axis X-X.

13. A nozzle (1001) according to one of the preceding claims, **characterised in that** the outer pipe (1003) and the inner pipe (1002) are arranged to one another in a manner such that the exit opening (1009) of the outer pipe (1003) is arranged concentrically to the exit opening (1007) of the inner pipe (1002).

14. A nozzle (1001) according to one of the preceding claims, **characterised in that** an attachment part in the form of swirl bodies, swirl plates or the like for leading the gas is arranged in the region of the nozzle mouthpiece (1006) between the outer pipe (1003) and the inner pipe (1002).

15. A nozzle (1001) according to one of the claims 7 to 14, **characterised in that** the inlay (1013) has a variable wall thickness and/or the oscillation of the inlay (1013) is a high frequency oscillation.

## Revendications

1. Buse (1001) pour la pulvérisation de substances, en particulier de dispersions, d'émulsions ou de suspensions, comprenant
- un corps de buse présentant un embout de buse (1006),
- dans laquelle le corps de buse présente un tube intérieur (1002) relié à une alimentation pour la substance à pulvériser, présentant une paroi intérieure et une ouverture de sortie (1007) et un tube extérieur (1003) présentant une ouverture de sortie (1009), relié à une alimentation pour un gaz et espacé par rapport au tube intérieur (1002), et
- l'ouverture de sortie (1007) du tube intérieur (1002) et l'ouverture de sortie (1009) du tube extérieur (1003) sont agencées dans la zone de l'embout de buse (1006),
**caractérisée en ce que** le tube intérieur (1002) est réalisé au moins partiellement en un matériau élastique et un dispositif (1033) est agencé dans la fente annulaire (1008) entre le tube intérieur (1002) et le tube extérieur (1003), lequel présente une entrée pour une alimentation en fluide et une sortie pour une évacuation de fluide, dans laquelle le dispositif (1033) présente une position de fermeture pour la fermeture du tube intérieur (1002) et au moins une position ouverte, dans laquelle dans l'au moins une position ouverte, au moins le canal de fluide (1005) pour la substance à pulvériser peut être traversé, et dans laquelle le dispositif (1033) est conçu de telle manière que le volume du dispositif (1033) soit modifiable par alimentation en fluide ou évacuation de fluide, par quoi le dispositif (1033) peut être amené ou est amené de l'une position de fermeture du tube intérieur (1002) dans l'au moins une position ouverte du tube intérieur (1002) et inversement.

2. Buse (1001) selon la revendication 1, **caractérisée en ce que** le dispositif (1033) est agencé dans la zone de l'embout de buse (1006).

3. Buse (1001) selon la revendication 1 ou 2, **caractérisée en ce que** le dispositif (1033) est relié à un dispositif de régulation qui régule l'alimentation en fluide ou l'évacuation de fluide du dispositif (1033) de sorte que le volume du dispositif (1033) soit réglable ou soit réglé, dans laquelle de manière appropriée, le volume du dispositif (1033) est réglable ou est réglé en continu.

4. Buse (1001) selon l'une quelconque des revendications précédentes, **caractérisée en ce que** le dispositif (1033) présente une position ouverte maximale, dans laquelle de manière appropriée, le volume du dispositif (1033) est minimal dans la position ouverte maximale.

5. Buse (1001) selon l'une quelconque des revendications précédentes, **caractérisée en ce que** le dispositif (1033) est réalisé en anneau autour du tube intérieur (1002), dans laquelle de manière appropriée, le dispositif (1033) réalisé en anneau est réalisé en tant qu'anneau à air comprimé.

6. Buse (1001) selon l'une quelconque des revendications précédentes, **caractérisée en ce que** la buse (1001) comprend plusieurs dispositifs (1033), en particulier deux dispositifs (1033), dans laquelle de manière appropriée, la buse (1001) présente un dispositif (1033) pour la fermeture de la fente annulaire (1008) et un dispositif (1033) pour la fermeture du canal de fluide (1005).

7. Buse (1001) selon l'une quelconque des revendications précédentes, **caractérisée en ce qu'**un insert (1013) est agencé au niveau du tube intérieur (1002) ou au niveau du tube extérieur (1003), dans laquelle l'insert (1013) est agencé de sorte qu'il puisse être amené ou soit amené en oscillation par la substance à pulvériser sortant de l'ouverture de sortie (1007) du tube intérieur (1002) et/ou le gaz sortant de l'ouverture de sortie (1009) du tube extérieur (1003) afin de minimiser ou d'empêcher des dépôts dans la zone de sortie de la substance à pulvériser et/ou du gaz.

8. Buse (1001) selon la revendication 7, **caractérisée en ce que** l'insert (1013) est agencé au niveau de la paroi intérieure ou au niveau d'une paroi extérieure ou dans une paroi du tube intérieur (1002) ou est agencé au niveau de la paroi intérieure (526) ou au niveau d'une paroi extérieure ou dans une paroi du tube extérieur (1003) et pénètre au moins partiellement dans une zone de sortie de la substance à pulvériser et/ou du gaz.

9. Buse (1001) selon l'une quelconque des revendications 7 ou 8, **caractérisée en ce que** l'insert (1013) est ou peut être agencé de manière interchangeable.

10. Buse (1001) selon l'une quelconque des revendications 7 à 9, **caractérisée en ce qu'**une section partielle (1017, 1018) de l'insert (1013) est réglable en longueur.

11. Buse (1001) selon l'une quelconque des revendications 7 à 10, **caractérisée en ce que** l'insert (1013) et le tube intérieur (1002) sont réalisés en tant que conduite d'un seul tenant (1032).

12. Buse (1001) selon l'une quelconque des revendications précédentes, **caractérisée en ce que** le tube extérieur (1033) et le tube intérieur (1002) sont agencés coaxialement autour d'un axe X-X.

13. Buse (1001) selon l'une quelconque des revendications précédentes, **caractérisée en ce que** le tube extérieur (1003) et le tube intérieur (1002) sont agencés l'un par rapport à l'autre de telle manière que l'ouverture de sortie (1009) du tube extérieur (1003) soit agencée de manière concentrique à l'ouverture de sortie (1007) du tube intérieur (1002).

14. Buse (1001) selon l'une quelconque des revendications précédentes, **caractérisée en ce qu'**une pièce de montage sous la forme de corps de tourbillon, tôles de tourbillon ou similaires est agencée pour le guidage de gaz dans la zone de l'embout de buse (1006) entre le tube extérieur (1003) et le tube intérieur (1002).

15. Buse (1001) selon l'une quelconque des revendications 7 à 11, **caractérisée en ce que** l'insert (1013) présente une épaisseur de paroi variable et/ou l'oscillation de l'insert (1013) est une oscillation à haute fréquence.
